# EUROPEAN PATENT APPLICATION

(11) **EP 4 331 740 A1**
(43) Date of publication of application: **06.03.2024**
(21) Application number: 22795749.5
(22) Date of filing: 26.04.2022
(51) Int. Cl.: B21D 22/00, B62D 25/04, G06F 30/10, G06F 30/23, G06F 113/22

(54) **WELD BEAD WIDTH DESIGN METHOD FOR TAILORED BLANK MATERIAL, MANUFACTURING METHOD, MANUFACTURING SYSTEM, WELD BEAD WIDTH DESIGN SYSTEM, VEHICULAR STRUCTURAL MEMBER, AND TAILORED BLANK MATERIAL**

(30) Priority: 28.04.2021 JP 2021075719
(71) Applicant: NIPPON STEEL CORPORATION, Chiyoda-ku Tokyo 100-8071 (JP)
(72) Inventor: NOMURA, Naruhiko, Tokyo 100-8071 (JP); SUZUKI, Toshiya, Tokyo 100-8071 (JP); HAMADA, Koichi, Tokyo 100-8071 (JP); TATSUMI, Yujiro, Tokyo 100-8071 (JP); YASUYAMA, Masanori, Tokyo 100-8071 (JP)
(74) Representative: J A Kemp LLP
(86) International application number: PCT/JP2022/018795
(87) International publication number: WO 2022/230836

(57) **Abstract**

[Object] In a press-formed product obtained by press forming a tailored blank, the width of the weld bead is brought closer to the target width.

[Solution] A method of designing the width of the weld bead in a tailored blank includes: a model acquisition step S11 for acquiring analysis model data containing elements for the first sheet, elements for the second sheet, and elements for the weld bead; a press-forming analysis step S12 for performing press-forming analysis using the analysis model data to calculate deformation of the various elements when the tailored blank is press formed; and a bead-width designing step S14 for deciding on a design value of the width of the weld bead for each of positions along the longitudinal direction of the weld bead in the tailored blank prior to press forming based on a press-forming-induced change in the width relating to the elements for the weld bead obtained through calculation, to generate bead-width design data indicating the relationship between a position along the longitudinal direction of the weld bead and the design value of the width of the weld bead.

## Description

### TECHNICAL FIELD

The present invention relates to a technique for designing and manufacturing a tailored blank.

### BACKGROUND ART

In recent years, it has become common to use, as a material to be pressed, a tailored blank made of a plurality of sub-sheets joined together by welding. Joining of sub-sheets into a tailored blank is performed, for example, by welding such as laser welding or plasma welding. The joint from welding is represented by a weld bead. Basically, to prioritize the stability of weld beads, welding is typically done in such a manner that the resulting weld bead width is constant and the strength properties of the bead are also constant.

To control heat input for laser welding, for example, Japanese Patent No. 3115733 discloses a method of controlling heat input for laser seam welding to provide a sufficient appearance quality and joint strength after laser seam welding using a YAG laser, for example. Japanese Patent No. 6609974 discloses a laser welding apparatus that welds a separator for a fuel cell, where repair welding is efficiently performed depending on the weld condition of the welded portion.

Further, the position of the join line, i.e., weld bead, in a tailored blank affects the quality of the press-formed product made of the tailored blank. In view of this, methods have been proposed that design a join line based on the result of a simulation using a computer. For example, Japanese Patent No. 4858259 discloses a method of setting a join line in a tailored blank by means of press-forming analysis. This method uses press-forming analysis to calculate positions with high defect risk and defect positions in a blank as press-formed, and sets a join line that avoids the calculated positions with high defect risk and defect positions.

Japanese Patent No. 5119712 discloses a method of designing a tailored blank. This method uses the finite element method to set a join line in a tailored blank that is to be press formed into a formed-product shape. Specifically, a formed-product shape model is created that is a provisional tailored-blank model having a provisional join line set therein that has been press formed. The formed-product shape model is subjected to a deformation test by one of flexure testing, torsion testing and vibration testing, using the finite element method to calculate the amount of deformation of the formed-product shape model. The provisional join line is adjusted such that the calculated amount of deformation is within an elasticity limit, thereby setting a join line.

### PRIOR ART DOCUMENTS

### PATENT DOCUMENTS

Patent Document 1: Japanese Patent No. 3115733
Patent Document 2: Japanese Patent No. 6609974
Patent Document 3: Japanese Patent No. 4858259
Patent Document 4: Japanese Patent No. 5119712

### SUMMARY OF THE INVENTION

### PROBLEMS TO BE SOLVED BY THE INVENTION

In a tailored blank made of a plurality of sub-sheets joined together (also referred to as tailor-welded blank), press forming may not only cause movement of the position of the weld bead on the formed surface, but also cause a change in the weld bead width. Particularly, hot stamping (i.e., hot pressing) involves press forming at high temperatures, which often causes deformation of the weld bead. Conventionally, when designs of tailored blanks are considered through forming analysis and impact analysis, the weld bead is typically omitted in calculation for such an analysis and is not taken into account for calculation. However, when two sheets with different strengths are actually joined by welding, the weld bead, which is formed by edge portions of those sheets fusing together, may have a strength that falls approximately in the middle between the strengths of the two sheets. Thus, the weld bead may have a lower strength than that one of the two welded sheets which has the higher strength. In view of these circumstances, the inventors realized that the weld bead must be taken into account for analysis. Further, the inventors noticed that forming-induced increases or decreases in the width of the weld bead may change the ratio between the high-strength region and the low strength-region in the formed surface such that the final strength properties of the formed product may diverge from the results of in-advance analyses. For example, if the weld bead has a lower strength than the high-strength sheet, a press-forming-induced increase in the width of the weld bead means a decrease in the high-strength region. In such cases, the results of analyses regarding strength properties and other features that do not take account of the weld bead may be overestimations.

In view of this, the inventors considered how to control the width of the weld bead in a press-formed product produced by press forming a tailored blank. The present application discloses a method of designing the width of a weld bead, a manufacturing method, a manufacturing system, a system for designing a weld bead width, a program, a structural member for a vehicle, and a tailored blank where press-forming-induced changes in the width of the weld bead in the tailored blank are taken into account to bring the width of the weld bead in the press-formed product closer to the target width.

### MEANS FOR SOLVING THE PROBLEMS

A method of designing a width of a weld bead in a tailored blank according to an embodiment of the present invention includes: a model acquisition step for acquiring analysis model data representing a tailored blank having a first sheet and a second sheet joined together, the analysis model data containing elements for the first sheet, elements for the second sheet, and elements for a weld bead between an edge of the first sheet and an edge of the second sheet; a press-forming analysis step for performing press-forming analysis using the analysis model data to calculate deformation of the elements for the first sheet, the second sheet and the weld bead when the tailored blank is press formed; and a bead-width designing step for deciding on a design value of a width of the weld bead for each of positions along a longitudinal direction of the weld bead in the tailored blank prior to press forming based on a press-forming-induced change in a width relating to the elements for the weld bead obtained through calculation at the press-forming analysis step, to generate bead-width design data indicating a relationship between a position along the longitudinal direction of the weld bead and the design value of the width of the weld bead.

### EFFECTS OF THE INVENTION

According to the present disclosure, press-forming-induced changes in the width of a weld bead in a tailored blank are taken into account to bring the width of the weld bead in the press-formed product closer to the target width.

### BRIEF DESCRIPTION OF THE DRAWINGS

[FIG. 1] FIG. 1 is a functional block diagram illustrating an exemplary configuration of a system for designing a tailored blank and a manufacturing system according to an embodiment.
[FIG. 2] FIG. 2 is a flow chart illustrating an exemplary operation of the designing system.
[FIG. 3] FIG. 3 illustrates an exemplary tailored-blank model.
[FIG. 4] FIG. 4 illustrates an exemplary result of a press-forming analysis using the tailored-blank model shown in FIG. 3.
[FIG. 5] FIG. 5 is a graph showing values of the widths W1 and W2 of the weld beads in the tailored-blank models shown in FIGS. 3 and 4.
[FIG. 6] FIG. 6 is a graph showing an exemplary result of a second round of press-forming analysis.
[FIG. 7] FIG. 7 is a graph showing the rates of change in the widths of the weld beads provided by the first and second rounds of press-forming analysis.
[FIG. 8] FIG. 8 is a flow chart showing another exemplary operation of the designing system 1.
[FIG. 9] FIG. 9 illustrates a portion of a tailored-blank model represented by join-line-containing analysis model data.
[FIG. 10] FIG. 10 illustrates a portion of an analysis result of the tailored-blank model shown in FIG. 9 as press-formed.
[FIG. 11] FIG. 11 is a graph showing values of the width W01 relating to elements on both sides of the join line in the tailored-blank models shown in FIGS. 9 and 10.
[FIG. 12] FIG. 12 is a flow chart showing an exemplary operation of the control unit 23.
[FIG. 13] FIG. 13 illustrates an example press-formed product according to an embodiment.
[FIG. 14] FIG. 14 illustrates an example press-formed product according to an embodiment.
[FIG. 15] FIG. 15 illustrates an example press-formed product according to an embodiment.
[FIG. 16] FIG. 16 illustrates an exemplary press-formed product according to an embodiment.
[FIG. 17] FIG. 17 illustrates an exemplary press-formed product according to an embodiment.
[FIG. 18] FIG. 18 illustrates the tailored blank shown in FIG. 17.

### EMBODIMENTS FOR CARRYING OUT THE INVENTION

### (Designing Method 1)

A method of designing a width of a weld bead in a tailored blank according to an embodiment of the present invention includes: a model acquisition step for acquiring analysis model data representing a tailored blank having a first sheet and a second sheet joined together, the analysis model data containing elements for the first sheet, elements for the second sheet, and elements for a weld bead between an edge of the first sheet and an edge of the second sheet; a press-forming analysis step for performing press-forming analysis using the analysis model data to calculate deformation of the elements for the first sheet, the second sheet and the weld bead when the tailored blank is press formed; and a bead-width designing step for deciding on a design value of a width of the weld bead for each of positions along a longitudinal direction of the weld bead in the tailored blank prior to press forming based on a press-forming-induced change in a width relating to the elements for the weld bead obtained through calculation at the press-forming analysis step, to generate bead-width design data indicating a relationship between a position along the longitudinal direction of the weld bead and the design value of the width of the weld bead.

In Designing Method 1 above, analysis model data containing elements for the weld bead is used to perform press-forming analysis to enable analyzing how the width of the weld bead changes due to press forming. A design value of the width of the weld bead prior to press forming is decided upon based on the press-forming-induced change in the width relating to the elements for the weld bead obtained through the analysis. A design value is decided upon for each of positions along the longitudinal direction of the weld bead. Further, bead width design data is generated that indicate the relationship between the position along the longitudinal direction of the weld bead and the design value of the width of the weld bead. This provides data indicating a distribution of the design value of the weld bead width along the longitudinal direction taking account of the press-formed-induced changes in the weld bead width. For example, a design value of the weld bead width may be decided upon to bring the width of the weld bead after the press-formed-induced change in the width relating to the elements for the weld bead closer to a target value (i.e. value that is aimed at) based on such a change obtained through the calculation. As used herein, design value means a value indicating the width of the weld bead that should be set before a tailored blank is fabricated. The bead width design data indicates how to set a width of the weld bead for each of positions along the longitudinal direction of the weld bead. Thus, the bead width design data makes it possible to take account of the press-formed-induced changes in the weld bead to bring the weld bead after press forming closer to a target width.

Deciding on a design value of the width of the weld bead may include, for example, deciding on a design value of the width of the weld bead for each of positions along the longitudinal direction of the weld bead in the tailored blank prior to press forming using a value of the width relating to the elements for the weld bead after press forming obtained through calculation at the press-forming analysis step. By way of example, the value of the width relating to the elements for each of positions along the longitudinal direction of the weld bead after press forming obtained through calculation and the target value of the width of the weld bead after press forming may be used to decide on a design value of the width of the weld bead.

The bead-width designing step may decide, for example, on such a design value of the width of the weld bead as to bring the width of the weld bead after the press-formed-induced change in the width relating to the elements for the weld bead closer to uniform across the entire weld bead along the longitudinal direction based on such a change obtained through the calculation. That is, the target value of the weld bead width after press forming may be a width that is uniform across the entire bead along the longitudinal direction. This enables deciding on such a width of the weld bead in the tailored blank prior to press forming that the width of the weld bead after press forming is uniform across the entire bead along the longitudinal direction. As used herein, longitudinal direction of the weld bead means the direction in which the weld bead extends.

### (Designing Method 2)

Starting from Designing Method 1 above, the model acquisition step, the press-forming analysis step and the bead-width design step may be repeatedly performed in two or more rounds. The model acquisition step from a second round onward may acquire analysis model data containing the elements for the weld bead with a width based on the bead width design data generated at the bead-width designing step in a previous round. A change in the bead width changes stress and deformation balance in surrounding elements. Thus, the bead width after press forming of the tailored blank based on the bead width design data obtained from one round of press-forming analysis may diverge from the target bead width. As discussed above, the bead width design data obtained from a previous round of calculation may be used to repeat the steps of analysis model data acquisition, press-forming analysis and bead width design in order to bring the weld bead after press forming even closer to the target value.

### (Designing Method 3)

Designing Method 1 or 2 above may further include: a join-line-containing-model acquisition step for acquiring join-line-containing analysis model data representing a tailored blank having a first sheet and a second sheet joined together, the join-line-containing model data containing elements for the first sheet and elements for the second sheet and including a join line for the first and second sheets, the elements for the first sheet and the elements for the second sheet being in contact along the join line; a previous-press-forming analysis step for performing press-forming analysis using the join-line-containing analysis model data to calculate deformation of the elements for the first and second sheets when the tailored blank represented by the join-line-containing analysis model data is press formed; and an initial value generation step for deciding on an initial value of the width of the weld bead corresponding to the join line based on a press-forming-induced change in a width relating to elements for the first and second sheets on both sides of the join line obtained through the calculation at the previous-press-forming analysis step to generate initial value data indicating a relationship between a position along the longitudinal direction of the weld bead and the initial value of the width of the weld bead. The model acquisition step may acquire the analysis model data containing the elements for the weld bead with a width based on the initial value data generated at the initial value generation step.

In Designing Method 3 above, join-line-containing analysis model data with a join line for welding constituted by the borderline between the elements for the first sheet and the elements for the second sheet is used to decide on an initial value of the width of the weld bead based on the change in the width relating to the elements in contact with the join line after press forming. Thus, a weld bead width that takes account of the press-formed-induced change in the width relating portions close to the join line is set as an initial value. Analysis model data containing elements for the weld bead having a width based on the initial value is used to calculate the deformation of the elements during press forming. A design value of the width of the weld bead is decided upon based on the calculated change in the width relating to the elements for the weld bead. This will provide bead width design data that makes it even easier to bring the width of the weld bead after press forming closer to the target value.

### (Manufacturing Method 1)

A method of manufacturing a tailored blank according to an embodiment of the present invention includes: the step of acquiring bead width design data indicating a relationship between a position along a longitudinal direction of a weld bead in a tailored blank and a width of the weld bead; and a welding step for bringing an edge of a first sheet and an edge of a second sheet into butt welding position and moving a fusion location forward along a butt line to weld the edge of the first sheet and the edge of the second sheet. The welding step moves the fusion location forward while controlling an amount of heat input for fusing based on the bead width design data.

In Manufacturing Method 1 above, welding is performed by moving forward the fusion location along the butt line while controlling the amount of heat input based on the bead width design data acquired in advance that indicates the relationship between the position along the longitudinal direction of the weld bead and the width of the weld bead. The amount of heat input for each fusion position is controlled based on the weld bead width design data. For example, the amount of heat input may be changed depending on the fusion position, i.e., position along the longitudinal direction of the butt line, based on the weld bead width design data. Thus, the relationship between the position along the longitudinal direction of the weld bead and the width of the weld bead indicated by the bead width design data can be reflected in the actual width of the weld bead. That is, the variations in the width of the weld bead along the longitudinal direction in the produced tailored blank has been controlled based on the bead width design data. Controlling the width of the weld bead in this manner will bring the width of the weld bead in the press-formed product obtained by press forming of the tailored blank closer to the target width.

Starting from Manufacturing Method 1 above, the bead width design data may be weld bead width design data generated by any one of Designing Methods 1 to 3 above. This will further ensure that the width of the weld bead is brought closer to the target width.

### (Manufacturing Method 2)

Starting from Manufacturing Method 1 above, the welding step may move the fusion location forward while controlling an amount of filler metal being supplied based on the weld bead width design data. This enables adjusting the amount of filler metal being supplied depending on the width of the weld bead. For example, if the weld bead width is large, the fused metal of the first and second sheets may be separated due to surface tension and other causes such that weld defects can easily occur. For example, such weld defects may be less likely to occur if the amount of filler metal being supplied is increased as the weld bead width increases. That is, the weld bead can be controlled so as to be stable. This will further ensure that the width of the weld bead is brought closer to the target width.

### (Manufacturing System)

A system for manufacturing a tailored blank according to an embodiment of the present invention includes: a heat input device adapted to input heat into an edge of a first sheet and an edge of a second sheet positioned in but welding position, to fuse the edges; a moving device adapted to moving a position for heat input by the heat input device along a butt line between the edge of the first sheet and the edge of the second sheet; and a control unit adapted to control the heat input device and the moving device. The control unit acquires bead width design data indicating a relationship between a position along a longitudinal direction of a weld bead in a tailored blank and a width of the weld bead, and controls an amount of heat input for fusing by the heat input device and movement of the heat input position by the moving device based on the bead width design data.

### (Designing System)

The steps of Designing Methods 1 to 3 above are performed by a computer. A system for performing any one of the processes of Designing Methods 1 to 3 above are encompassed in the embodiments of the present invention. A system for designing a weld bead width in a tailored blank according to an embodiment of the present invention includes: a model acquisition unit adapted to acquire analysis model data representing a tailored blank having a first sheet and a second sheet joined together, the analysis model data containing elements for the first sheet, elements for the second sheet, and elements for a weld bead between an edge of the first sheet and an edge of the second sheet; a press-forming analysis unit adapted to perform press-forming analysis using the analysis model data to calculate deformation of the elements for the first sheet, the second sheet and the weld bead when the tailored blank is press formed; and a bead-width designing unit adapted to decide on a design value of a width of the weld bead for each of positions along a longitudinal direction of the weld bead in the tailored blank prior to press forming based on a press-forming-induced change in a width relating to the elements for the weld bead obtained through calculation by the press-forming analysis unit, to generate bead width design data indicating a relationship between a position along the longitudinal direction of the weld bead and the design value of the width of the weld bead.

### (Program)

A program for causing a computer to perform any one of Designing Methods 1 to 3 above and a storage medium storing such a program are encompassed in the embodiments of the present invention. A program according to an embodiment of the present invention causes a computer to perform: a model acquisition process for acquiring analysis model data representing a tailored blank having a first sheet and a second sheet joined together, the analysis model data containing elements for the first sheet, elements for the second sheet, and elements for a weld bead between an edge of the first sheet and an edge of the second sheet; a press-forming analysis process for performing press-forming analysis using the analysis model data to calculate deformation of the elements for the first sheet, the second sheet and the weld bead when the tailored blank is press formed; and a bead width designing process for deciding on a design value of a width of the weld bead for each of positions along a longitudinal direction of the weld bead in the tailored blank prior to press forming based on a press-forming-induced change in a width relating to the elements for the weld bead obtained through calculation in the press-forming analysis process to generate bead-width design data indicating a relationship between a position along the longitudinal direction of the weld bead and the design value of the width of the weld bead.

### (Structural Member for Vehicle)

A structural member for a vehicle according to an embodiment of the present invention is formed by a press-formed product made from a tailored blank including a first sheet and a second sheet joined together and a weld bead for welding an edge of the first sheet and an edge of the second sheet. The press-formed product includes at least one of a portion having experienced extensional flange (stretch flange) deformation, a portion having experienced shrink flange deformation, and a portion having experienced stretch deformation during press forming. A width of the weld bead in the portion having experienced extensional flange deformation, the portion having experienced shrink flange deformation, or the portion having experienced stretch deformation is equivalent to a width of the weld bead in another portion.

A structural member for a vehicle, which is a press-formed product, often includes at least one of a portion having experienced extensional flange deformation, a portion having experienced shrink flange deformation, and a portion having experienced stretch deformation during press forming. That is, a press-formed product that constitutes a structural member for a vehicle has portions with different types of deformation that are intermixed. In such implementations, for example, the distribution of the width of a single weld bead along the longitudinal direction in a tailored blank prior to forming may be a distribution that will result in an equivalent weld bead width after press forming. In such arrangements, if the weld bead widths in portions with different kinds of deformation are equiavalent, the effects of variations in the weld bead width on the strength properties of the structural member for a vehicle will be reduced. For example, the various materials of the tailored blank may be distributed among different regions in accordance with the design. This will reduce the difference between an impact performance estimate by CAE, for example, and the performance of an actual press-formed product. Further, even if a single weld bead is positioned in the portion with extensional flange deformation, shrink flange deformation or stretch deformation, the effects of changes in the weld bead width on the performance of the press-formed product will be reduced. This will reduce restrictions on design regarding the position of the weld bead. This will improve the freedom in design regarding the position of the weld line i.e. weld bead and, at the same time, ensure a sufficient performance of the press-formed product. The structural member for a vehicle may be a press-formed product produced by Manufacturing Method 1 or 2 above. The structural member for a vehicle may be a hot-press-formed product. The press-formed product made from a tailored blank is a press-formed product constituted by a tailored blank.

Implementations where the widths of different portions of the weld bead are equivalent include implementations where the widths are exactly equal and implementations where there are small differences that allow the widths to be considered equal in terms of strength properties. If, within a single weld bead in the press-formed product, the difference between the weld bead width in the portion having experienced extensional flange deformation, the portion having experienced shrink flange deformation, or the portion having experienced stretch deformation, on the one hand, and the weld bead width in other portions that have experienced none of these kinds of deformation or relatively small deformation during press forming, on the other, is within ±13 % of the latter, then, these widths are considered equivalent. If the ratio of the minimum value of the width to the maximum value is represented by 77 % ≤ min/max ≤ 100 % across the entire single weld bead along the longitudinal direction in a press-formed product, the above-defined weld bead widths are considered equal and the width of the weld bead is considered uniform across the entire bead along the longitudinal direction. Within a single weld bead in the press-formed product, the ratio of the difference between the width of the weld bead in the portion having experienced extensional flange deformation, the portion having experienced shrink flange deformation, or the portion having experienced stretch deformation, on the one hand, and the width of the weld bead in the other portions, on the other, relative to the latter, is preferably within ±8 %, and more preferably within ±5 %. The ratio of the minimum of the width to the maximum across the entire single weld bead along the longitudinal direction in the press-formed product is preferably represented by 85 % ≤ min/max ≤ 100 %, and more preferably 90 % ≤ min/max ≤ 100 %.

By way of example, the structural member for a vehicle may include a top sheet, a pair of walls extending from the associated edges of the top sheet and facing each other, and a pair of flanges extending, from those edges of the walls opposite to the edges adjacent to the top sheet, outwardly away from each other. The ridge between each of the flanges and the associated wall may include a curved portion curved as viewed in a direction perpendicular to the plane of the flange. The weld bead may be formed in such a manner that the width of the weld bead as measured in a portion of the flange extending outwardly from the curved portion is equivalent to the width of the weld bead as measured in other portions (e.g., the walls or the top sheet). In other words, the weld bead may be formed in such a manner that the width of the weld bead as measured in a portion of the flange extending from the curved portion in the direction opposite to that of the flow of the material during press forming is equivalent to the width of the weld bead as measured in other portions (e.g., the walls or the top sheet). In such implementations, the width of the weld bead as measured in a portion of a structural member for a vehicle that has experienced extensional flange deformation or shrink flange deformation is equivalent to the width of the weld bead as measured in other portions.

By way of example, the curved portion of a ridge may include a curved portion that protrudes in the direction in which the associated flange extends from the ridge, i.e. protrudes outwardly as viewed in a direction perpendicular to the plane of the flange (i.e., outwardly protruding curved portion). As the width of the weld bead as measured in a portion of the flange extending outwardly from this outwardly protruding curved portion is equivalent to the width of the weld bead as measured in other portions, the width of the weld bead as measured in a portion that has experienced shrink flange deformation is equivalent to the width of the weld bead as measured in other portions.

The curved portion of a ridge may include a curved portion that protrudes in the direction opposite to the direction in which the associated flange extends from the ridge, i.e. protrudes inwardly as viewed in a direction perpendicular to the plane of the flange (i.e., inwardly protruding curved portion). As the width of the weld bead as measured in a portion of the flange extending outwardly from this inwardly protruding curved portion is equivalent to the width of the bead as measured in other portions, the width of the weld bead as measured in a portion that has experienced extensional flange deformation is equivalent to the width of the weld bead as measured in other portions.

### (Tailored Blank)

A tailored blank according to an embodiment of the present invention includes a first sheet and a second sheet joined together and a weld bead for welding an edge (or side) of the first sheet and an edge (or side) of the second sheet. The weld bead includes a portion with a width of 80 to 91 % of a maximum width of the weld bead.

As a single weld bead in the tailored blank is provided with a portion with a width of 80 to 91 % of the maximum width, the width of the weld bead as measured in that portion of the press-formed product obtained by press forming of the tailored blank will be closer to equivalent to the width of the weld bead as measured in other portions. For example, if the width of a portion of the weld bead that experiences tensile distortion (i.e., extension) in the width direction due to extensional flange deformation is 80 to 91 % of the maximum width, the width in that portion after forming will be closer to equivalent to the width in other portions. Alternatively, if a portion of the weld bead that experiences compressive distortion (i.e., contraction) in the width direction due to shrink flange deformation includes the portion with the maximum width, and the width in other portions that experience no contraction or relatively small contraction is 80 to 91 % of the maximum width, the width in the portion with contraction after forming will be closer to equivalent to the width in other portions.

The inventors discovered that, during extensional flange, shrink flange or stretch deformation during press forming, the ratio of change in the width of the weld bead relative to its width prior to forming can be assumed to be about 10 to 25 %. Thus, for example, if the pre-forming width of a portion of the weld bead that is to experience larger deformation during press forming than other portions is 80 to 91 % of the width in other portions, the width of the weld bead after forming in the portion with relatively large deformation can be closer to equivalents to the width in other portions. That is, the ratio of the difference between the width in a portion of the weld bead after forming that has relatively large deformation and the width in other portions, relative to the latter, can be closer to the range of ±13 %. For the same reasons, the weld bead prior to forming preferably includes a portion with a width of 87 to 91 % of the maximum width. In such implementations, if the ratio of change in the width of the weld bead relative to the width prior to forming due to extensional flange deformation, shrink flange deformation or stretch deformation is within the range of 10 to 15 %, the ratio of the difference between the width in a portion of the weld bead after forming that has relatively large deformation and the width in other portions, relative to the latter, can be closer to the range of ±5 %.

As used herein, maximum width of a single weld bead means the width of the portion of the weld bead that has the largest width in the entire bead along the longitudinal direction. In such a tailored blank, the weld bead is formed such that the width varies depending on position along the longitudinal direction. In this arrangement, a single weld bead may include a portion in which the width of the bead does not vary along the longitudinal direction and is constant. For example, the portion of the weld bead that has the maximum width may be continuous in the longitudinal direction. Further, the width of a single weld bead may be not smaller than 80 % of the maximum width across the entire weld bead along the longitudinal direction. That is, a single weld bead may be formed such that it does not include a portion with a width smaller than 80 % of the maximum width. The width of a single weld bead is preferably not smaller than 87 % of the maximum width across the entire weld bead along the longitudinal direction.

In the tailored blank, the weld bead may extend from one edge of the tailored blank to another edge. At least one of one end portion of the weld bead including the one edge and another end portion including the other edge may provide the above-mentioned portion with a width of 80 to 91 % of the maximum width. Thus, for example, in implementations where an edge portion of the tailored blank experiences extensional flange deformation during forming, the end portion of the weld bead that experiences extensional flange deformation may be the above-mentioned portion with a width of 80 to 91 % of the maximum width. In such implementations, the width in the above-mentioned portion extends during forming. As a result, the width in the above-mentioned portion after forming is equivalent to the width in other portions that have not experienced extensional flange deformation. As used herein, one end portion of the weld bead means a portion of the weld bead along the longitudinal direction that includes the one edge, whereas other end portion of the weld bead means a portion of the weld bead along the longitudinal direction that includes the other edge. Further, at least one of the range of 20 to 40 cm of the weld bead in the longitudinal direction away from the one edge and the range of 20 to 40 cm of the weld bead in the longitudinal direction away from the other edge may include the above-mentioned portion with a width of 80 to 91 % of the maximum width. In the weld bead, both the one end portion and the other end portion may provide the above-mentioned portions with a width of 80 to 91 % of the maximum width. Thus, for example, if the both end portions of the weld bead are formed to experience extensional flange deformation, the weld bead width in the both end portions that have experienced extensional flange deformation may be closer to equivalent to the weld bead width in other portions.

In the tailored blank, the width of the weld bead in a region that is expected to experience extensional flange deformation, shrink flange deformation, or stretch deformation during press forming may be different from the weld bead width in other regions that are expected to experience no such deformation or relatively small deformation. That is, the bead width in the blank prior to press forming may vary along the longitudinal direction depending on the expected change in the weld bead width due to press forming. Thus, the weld bead width in a portion of the press-formed product that has experienced extensional flange deformation, shrink flange deformation, or stretch deformation may be closer to equivalent to the weld bead width in the other portions. For example, in the tailored blank, the width of the weld bead as measured in a region that is expected to experience extensional flange deformation during press forming may be smaller than the width of the weld bead in other regions that are expected to experience no extensional flange deformation or relatively small deformation. The region that is expected to experience extensional flange deformation, shrink flange deformation or stretch deformation during press forming can be determined, for example, from design information about the press-formed product. Alternatively, this region can be determined by a computer-driven analysis process (e.g., CAE) based on design data of the press-formed product.

A method of manufacturing a structural member for a vehicle is also encompassed in the embodiments of the present invention. The manufacturing method includes: the step of joining a first sheet and a second sheet by welding to form a tailored blank, and the step of press forming the tailored blank. The press forming applies at least one of extensional flange deformation, shrink flange deformation, and stretch deformation to a portion of the tailored blank. The step of forming the tailored blank performs the welding in such a manner that the width of the weld bead as measured in a region expected to experience the extensional flange deformation, the shrink flange deformation or the stretch deformation is different from the weld bead width in other regions expected to experience no such deformation or relatively small deformation. This enables manufacturing a structural member for a vehicle in which the width of the weld bead in the portion having experienced extensional flange deformation, the portion having experienced shrink flange deformation or the portion having experienced stretch deformation is equivalent to the width of the weld bead in the other portions. The step of forming the tailored blank may form the tailored blank in such a manner that the weld bead includes a portion that has a width of 80 to 91 % of the maximum width of the weld bead. The press forming may be, for example, hot press forming.

Now, embodiments of the present invention will be described in detail with reference to the drawings. The same or corresponding components in the drawings are labeled with the same reference numerals, and their description will not be repeated. The size ratios of the components shown in the drawings do not necessarily represent their actual size ratios.

### [Exemplary System Configuration]

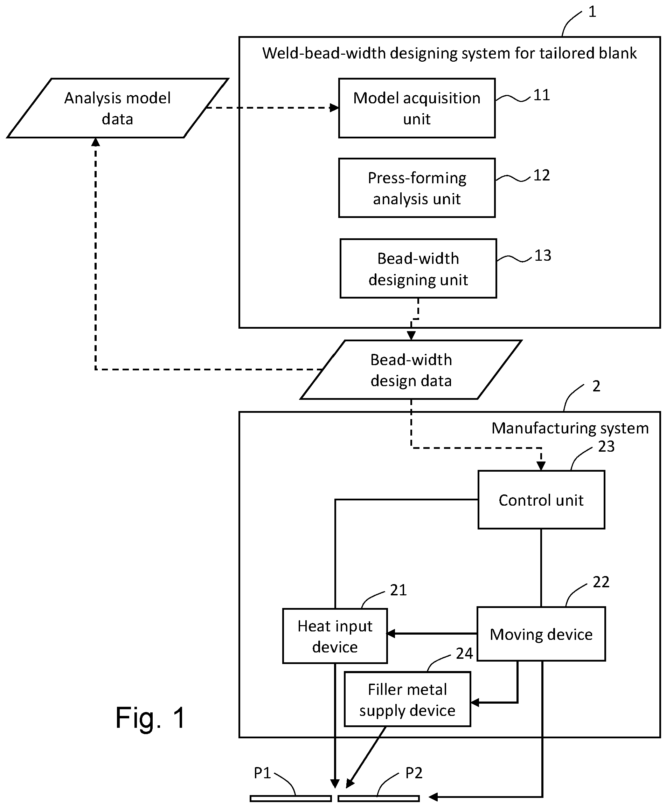

FIG. 1 is a functional block diagram illustrating an exemplary configuration of a system for designing the width of a weld bead in a tailored blank, denoted by numeral 1 (hereinafter also simply referred to as "designing system 1") and a system for manufacturing a tailored blank, denoted by numeral 2, according to an embodiment. A tailored blank is modeled with a plurality of elements to create analysis model data, which is used by the designing system 1 to perform press-forming analysis; the system then uses the result of this analysis to generate bead width design data. The bead width design data is data indicating the relationship between the position along the longitudinal direction of the weld bead in the tailored blank and the width of the weld bead. The manufacturing system 2 controls the position and the amount of heat input for welding along the butt line(s) between a plurality of sheets based on the bead width design data to produce a tailored blank.

### (Exemplary Configuration of Designing System)

The designing system 1 includes a model acquisition unit 11, a press-forming analysis unit 12, and a bead-width designing unit 13. The model acquisition unit 11 acquires analysis model data representing a tailored blank. The model acquisition unit 11 reads analysis model data from a storage device accessible to the designing system 1 to make it available for the press-forming analysis unit 12.

The analysis model data acquired by the model acquisition unit 11 has been created by modeling a tailored blank, which is a material to be press formed, with a plurality of elements. The material to be press formed may be a flat sheet or an intermediate formed product. The plurality of elements that represent the tailored blank may be, for example, shell elements, solid elements, or a combination thereof. In addition to analysis model data, the model acquisition unit 11 may acquire die data indicating the die shape used in press forming to be analyzed.

The analysis model data is not limited to any particular data, and may be created, for example, based on shape data indicating the shape of a tailored blank, such as CAD data. For example, the analysis model data may be created by dividing a tailored blank indicated by shape data into elements (i.e., mesh division). The designing system 1 may include a functional unit that generates analysis model data from shape data. In such implementations, the designing system may automatically perform a process for dividing a tailored blank indicated by shape data into elements. Further, prior to the process of dividing data into elements, the system may receive user input about at least one of the type of elements, the number of elements, or the node position of an element.

The analysis model data includes elements for a first sheet (i.e., first sheet model), elements for a second sheet (i.e., second sheet model) and elements for a weld bead between an edge of the first sheet and an edge of the second sheet (i.e., weld bead model). The analysis model data is created by modeling a tailored blank having the first and second sheets with their relevant edges joined together by welding. In the analysis model data, the elements for the weld bead are positioned between the elements for the first sheet and the elements for the second sheet. The weld bead is modeled, for example, with a plurality of elements arranged in the longitudinal direction of the weld bead. The width relating to the elements for the weld bead corresponds to the width of the weld bead. The width of the weld bead may be the size of the weld bead in a direction perpendicular to the longitudinal direction of the weld bead (i.e., direction of extension) as viewed in a direction perpendicular to the plane of the tailored blank. In the analysis model data, the width relating to the elements for the weld bead may be constant along the longitudinal direction of the weld bead, or the width relating to the weld bead may vary along the longitudinal direction of the weld bead.

The press-forming analysis unit 12 uses a simulation using the analysis model data (i.e., press-forming analysis) to calculate the deformation of each of the elements found when the tailored blank is press-formed into a press-formed product. The press-forming analysis unit 12 performs the press-forming analysis process by the finite element method, for example. The press-forming analysis process first decides on analysis model data used for analysis and die data indicating a die shape. For example, analysis model data and die data acquired by the model acquisition unit 11 are used for the press-forming analysis process. The press-forming analysis process decides on border conditions and material property values. The border conditions and material property values may be, for example, included in advance in the analysis model data and/or die data, or such may be decided upon based on user input or may be decided upon based on data stored in advance.

Material property values may be set for each of the first sheet, second sheet and weld bead, for example. Examples of material property values include, but are not limited to, stress-distortion property, Young's modulus, density, thermal conductivity and specific heat.

Examples of border conditions include, but are not limited to, frictional coefficient, heat transfer coefficient, condition of restriction on displacement of elements, and operational path of the die. An example of a condition of restriction on displacement of elements is a restriction on the position of a tailored blank. A specific example of a restriction condition is fixing of some of the elements of the tailored blank (e.g., central or edge portions) to a specified point to prevent them from moving.

The press-forming analysis unit 12 uses the analysis model data, die data, border conditions and material property values to perform a predetermined operation, thereby calculating the stress in, and distortion of, each element during press forming. In calculating stress and distortion, the effects of temperature, for example, may be taken into consideration. That is, the press-forming analysis performed by the press-forming analysis unit 12 may include heat transfer and hot deformation analysis of a tailored blank during press forming.

The press-forming analysis unit 12, outputs, as analysis results, data indicating how the tailored blank has deformed due to press forming. The shape of the tailored blank after press forming, i.e., press-formed product, is represented by the elements after press forming calculated by the press-forming analysis. For example, the analysis results from the press-forming analysis unit 12 may include data indicating the width of the weld bead after press forming or the amount of change due to press forming. The analysis results from the press-forming analysis unit 12 may include, in addition to deformation of the elements, internal stress, temperature and other physical quantities.

The bead-width designing unit 13 uses the analysis results from the press-forming analysis unit 12 to decide on a design value of the width of the weld bead in the tailored blank prior to press forming. In this implementation, the unit decides on design values for various positions along the longitudinal direction of the weld bead. The bead-width designing unit 13 generates bead width design data. The bead width design data indicates the relationship between the position along the longitudinal direction of the weld bead and the design value of the width of the weld bead. The bead width design data indicates the distribution of the width along the longitudinal direction of the weld bead. The bead width design data is not limited to a constant weld bead width, but can represent a weld bead width varying along the longitudinal direction. That is, a design value of a weld bead width that varies along the longitudinal direction can be indicated by the bead width design data. A design value of the width of the weld bead indicated by the bead width design data is not limited to the width (i.e., size) of the weld bead, and may be, for example, a ratio of change in the width along the longitudinal direction or any other value relating to the weld bead. The bead width design data may be used, for example, as a weld control parameter used to produce a tailored blank by welding first and second sheets with the manufacturing system 2. This will provide a weld bead in a produced tailored blank that conforms with the design.

Based on the press-formed-induced change in the width relating to the elements for the weld bead obtained through the calculation by the press-forming analysis unit 12, the bead-width designing unit 13 may decide on a design value of the width of the weld bead that brings the width of the weld bead after the change close to a target value. For example, the bead-width designing unit 13 may calculate a value indicating the difference between the width of the weld bead after press forming indicated by the analysis results from the press-forming analysis unit 12, on the one hand, and the target value, on the other, and, based on that value, decide on a design value of the width of the weld bead. For example, the unit may change the width of the weld bead in the tailored blank prior to forming so as to reduce that difference. The unit decides to treat the weld bead width after the change as a design value. By way of example, the unit may apply a change opposite to the change in the width of the weld bead calculated through the analysis to the target value of the width of the weld bead after press forming, and decide to treat the result as a design value of the width of the weld bead prior to press forming. Thus, the bead-width designing unit 13 may decide on a design value based on a comparison between the width of the weld bead after press forming obtained through the analysis and the target value. The target value may be stored in advance, or may be input by a user.

The designing system 1 may repeat the press-forming analysis by the press-forming analysis unit 12 and the generation of bead width design data by the bead-width designing unit 13 in two or more rounds. In such implementations, the press-forming analysis unit 12 may use analysis model data with a weld bead width set based on bead width design data that has been previously generated by the bead-width designing unit 13 to perform the press-forming analysis process from the second round onward. Thus, the designing system 1 may set a width relating to the elements for the weld bead in the analysis model data to be acquired by the model acquisition unit 11 based on bead width design data that has been previously generated by the bead-width designing unit 13.

Further, an initial value of the width relating to the elements for the weld bead in the analysis model data to be used for the first round of press-forming analysis at the press-forming analysis unit 12 may be set based on the results of a previous round of press-forming analysis using a join-line-containing analysis model data. That is, the press-forming analysis unit 12 may use a simulation using join-line-containing analysis model data to calculate a press-formed-induced change in the elements for the tailored blank and, based on the result of calculation, decide on an initial value of the weld bead width.

The join-line-containing analysis model data is acquired by the model acquisition unit 11. The join-line-containing analysis model data includes elements for the first sheet and elements for the second sheet. The join-line-containing analysis model data includes a join line between the first and second sheets constituted by the join line between the elements for the first sheet and the elements for the second sheet positioned in contact. That is, the join line between the elements for the first sheet and the elements for the second sheet positioned in contact therewith constitutes the join line for welding. The join line may be, for example, the borderline between the first and second sheets. No elements for the weld bead are inserted between the elements for the first sheet and the elements for the second sheet. Although not limiting, the join-line-containing analysis model data may be generated, for example, based on the shape data of the tailored blank, as is the case with the analysis model data.

The press-forming analysis unit 12 uses a simulation using the join-line-containing analysis model data (i.e., press-forming analysis) to calculate the deformation of each element found when the tailored blank represented by the join-line-containing analysis model data is press formed. The press-forming analysis unit 12 may perform the press-forming analysis using the finite element method, for example. As part of the analysis, the press-forming analysis unit 12 calculates the change in the width relating to elements on both sides of the join line in the press-formed product relative to the width relating to elements on both sides of the join-line-containing prior to press forming. The position of the join line in the join-line-containing analysis model data is the position at which the weld bead can be positioned. In other words, the position of the join line corresponds to the position of the weld bead.

The bead-width designing unit 13 can use the results of the press-forming analysis using the join-line-containing analysis model data to generate initial value data for the width relating to the elements for the weld bead. Based on the press-forming-induced change in the width relating to elements on both sides of the join line, the bead-width designing unit 13 decides on an initial value of the width of the weld bead in the tailored blank. The unit decides on an initial value of the width of the weld bead positioned to correspond to the join line. The unit decides on an initial value for each of positions along the longitudinal direction of the join line. For example, based on the press-forming-induced change in the width relating to elements on both sides of the join line obtained through the calculation by the press-forming analysis unit 12, the designing unit may determine the width relating to the elements that will lead to the width relating to the elements after the change being closer to the target value and, based on this width, decide on an initial value of the width relating to the elements of the weld bead. For example, the initial value may be calculated based on a comparison between the width relating to elements on both sides of the join line after press forming, on the one hand, and the target value, on the other. In such implementations, the target value may be stored in advance, or may be input by a user. The bead-width designing unit 13 generates initial value data. The initial value data generated indicates the relationship between the position along the longitudinal direction of the weld bead and the initial value of the width of the weld bead. Based on this initial value data, the unit sets a width relating to the elements for the weld bead in the analysis model data. The analysis model data is acquired by the model acquisition unit 11 and used for the press-forming analysis by the press-forming analysis unit 12.

The designing system 1 may be constituted by a computer including a processor and memory. The processor executing a program stored on the memory implements the functions of the model acquisition unit 11, press-forming analysis unit 12 and bead-width designing unit 13. Such a program as well as a non-transitory storage medium storing such a program are encompassed in the embodiments of the present invention. The various units of the designing system 1 may be implemented by a plurality of processors.

The configuration of the designing system 1 is not limited to the above-described implementation. For example, in addition to the weld bead width design data, the designing system may generate a design value or initial value of the position of the weld bead. For example, the designing system may use the results of analysis from the press-forming analysis unit 12 to decide on a position of the weld bead in the tailored blank prior to press forming.

### (Exemplary Configuration of Manufacturing System)

The manufacturing system 2 includes a heat input device 21, a moving device 22, and a control unit 23. The heat input device 21 inputs heat into an edge of a first sheet P1 and an edge of a second sheet P2, the first and second sheets being in butt welding position, and fuses these edges. The moving device 22 moves the position at which heat is input by the heat input device 21 in the direction of the butt line between the relevant edges of the first and second sheets P1 and P2, i.e., in the longitudinal direction of the butt line. The control unit 23 controls the input device 21 and moving device 22. Based on the bead width design data, the control unit 23 controls the amount of heat input by the heat input device 21 for fusing, and movement of the heat input position by the moving device 22. The bead width design data indicates the relationship between the position along the longitudinal direction of the weld bead in the tailored blank and the width of the weld bead. The bead width design data is generated by the designing system 1.

The heat input device 21 may be a laser welding device, for example. The laser welding device includes a laser beam source and a light-concentrating device that concentrates a laser beam. A spot at which a beam is concentrated by the light-concentrating device represents a heat input position. The moving device 22 changes the heat input position for the heat input device 21 relative to the positions of the objects to be welded (in the present implementation, the first and second sheets P1 and P2). The moving device 22 may include, e.g., an actuator (e.g., motor) that moves at least one of the heat input device 21 or a support member that supports the objects to be welded. The heat input device 21 is not limited to a laser welding device. The heat input device 21 may be, for example, a plasma welding device, a TIG welding device or any other welding device.

In the implementation shown in FIG. 1, the manufacturing system 2 includes a filler metal supply device 24. The filler metal supply device 24 supplies filler metal (filler material) to the heat input position. For example, the filler metal supply device 24 may be constructed to hold filler wire in a slidable manner, and to feed the filler wire such that its tip is at the heat input position. The filler supply device 24 may be controlled by the control unit 23. It is to be understood that, in the manufacturing system 2, the filler metal supply device 24 may be omitted. Alternatively, the filler metal supply device 24 may be part of the heat input device.

The controller unit 23 may be constituted by a computer or circuit including a processor and memory. For example, the control unit 23 may be constituted by a computer or circuit incorporated in at least one of the heat input device 21 or moving device 22, or may be constituted by a general-purpose computer.

The control unit 23 controls the heat input device 21 and moving device 22 to control the amount of heat input and, at the same time, move the weld location forward along the butt line between the relevant edges of the first and second sheets P1 and P2. That is, the control unit 23 controls the heat input device 21 and moving device 22 to control the heat input position along the butt line and the amount of heat input. The control unit 23 achieves an amount of heat input that is variable depending on heat input position. The heat input position and the amount of heat input are controlled based on the bead width design data. The bead width design data indicates the relationship between the position along the longitudinal direction of the weld bead and the width of the weld bead. The width of the weld bead is mainly determined by the amount of heat input. For example, the larger the heat input, the larger the width of the weld bead. Thus, the bead width design data can also be considered to be data indicating how much heat input is to be provided at which position on the butt line. Depending on the width of the weld bead as measured at a position along the longitudinal direction of the weld bead indicated by the bead width design data, the control unit 23 is capable of controlling the amount of heat input at the associated heat input position along the direction of forward movement of welding (i.e., direction of the butt line).

For example, the control unit 23 may control the amount of heat input by controlling at least one of the laser output, welding speed and focus position (i.e., position at which a beam is concentrated) of the heat input device 21. As used herein, welding speed means the speed at which the heat input position (i.e., fusion location) moves forward in the direction of the butt line. Focus position means the position of the focus of a laser beam as determined along its direction of incidence. The amount of heat input that is controlled may be, for example, energy density supplied for welding. As used herein, energy density means the amount of energy supplied per unite area of objects being welded per unit time.

In addition to controlling the heat input position and the amount of heat input, the control unit 23 may also control the amount of filler metal being supplied for a given heat input position. That is, the control unit 23 may control the filler metal supply device 24 in addition to the heat input device 21 and moving device 22. Thus, the control unit 23 is capable of controlling the amount of filler metal being supplied. The amount of filler metal being supplied that is controlled may be, for example, the amount of filler metal being supplied per unit area per unit time. The position for filler supply and the amount of filler metal being supplied are controlled by the control unit 23. The amount of filler metal being supplied for a given heat input position along the butt line may be controlled based on the bead width design data, for example. Thus, the amount of filler metal being supplied varies depending on the design value of the weld bead width. For example, for a portion of the bead with a larger set width than other portions indicated by the bead width design data, the amount of filler metal being supplied may be increased compared with the other portions. In such implementations, increasing the amount of filler metal being supplied will make up for the possible insufficient molten metal to keep the bead width stable. Thus, the control unit 23 is capable of controlling the amount of filler metal being supplied for a given heat input position along the direction of forward welding movement depending on the width of the weld bead for the corresponding position along the longitudinal direction of the weld bead indicated by the bead width design data.

### (Exemplary Operation 1 of Designing System)

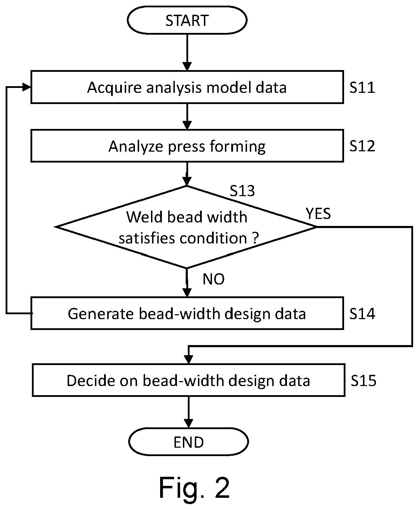

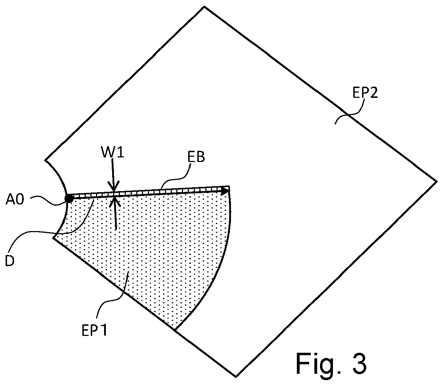

FIG. 2 is a flow chart illustrating an exemplary operation of the designing system 1. In the implementation shown in FIG. 2, the model acquisition unit 11 acquires analysis model data (S11). FIG. 3 illustrates an exemplary tailored-blank model represented by the analysis model data. The tailored-blank model shown in FIG. 3 includes elements for the first sheet, EP1, elements for the second sheet, EP2, and elements for the weld bead, EB. The elements EB for the weld bead are located between the elements EP1 for the first sheet and the elements EP2 for the second sheet. In FIG. 3, the mesh is not shown for the elements EP1 and EP2 for the first and second sheets. The model shown in FIG. 3 is a model of a tailored blank including a hole that extends through the sheet, and is a model of a one-fourth portion of the tailored blank.

In the analysis model data, a width W1 is set for the elements EB for the weld bead. In the implementation shown in FIG. 3, the width W1 is uniform along the longitudinal direction D of the weld bead; alternatively, the width W1 may vary along the longitudinal direction D.

At step S12 of FIG. 2, the press-forming analysis unit 12 uses the analysis model data acquired at step S11 to perform press-forming analysis (i.e., simulation). The press-forming analysis calculates the deformation of the elements during press forming of the tailored blank. The press-forming analysis may include thermal treatment analysis. In such implementations, the unit calculates stress in and distortion of the elements during hot press forming of the tailored blank and, in addition, the change in temperature.

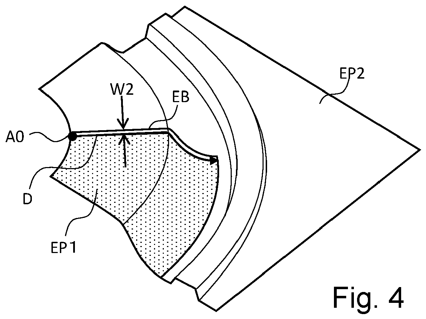

FIG. 4 illustrates an exemplary result of a press-forming analysis using the tailored-blank model shown in FIG. 3. The implementation shown in FIG. 4 shows a flat-sheet tailored blank that has been cylindrically bulged. In FIG. 4, the mesh is not shown for the elements. The press-forming analysis provides data that indicates the shape of the tailored blank after press forming. The width relating to the elements EB for the weld bead, W2, in the data of the tailored blank after press forming provides information indicating press-forming-induced changes in the width of the weld bead.

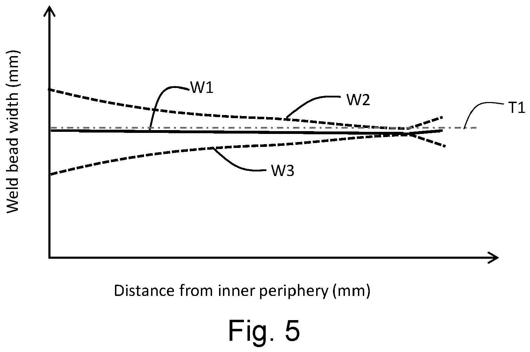

FIG. 5 is a graph showing values of the widths W1 and W2 of the weld bead in the tailored-blank models shown in FIGS. 3 and 4. In the graph of FIG. 5, the horizontal axis represents the distance from the inner peripheral edge A0 along the longitudinal direction D of the weld bead, whereas the vertical axis represents the width of the weld bead. In the implementation shown in FIG. 5, the width W1 of the weld bead prior to press forming is uniform along the longitudinal direction D. The width W2 of the weld bead after press forming obtained through the analysis is not uniform along the longitudinal direction D and is different from the width W1 prior to press forming. The relationship between the position along the longitudinal direction D of the weld bead and the width is changed by press forming. As shown in FIG. 5, the relationship between the position along the longitudinal direction D of the weld bead and the width W2 indicates press-forming-induced changes in the width of the weld bead. Thus, changes in the width of the weld bead are calculated through the press-forming analysis. T1 in FIG. 5 indicates an exemplary target value (i.e., value aimed at) of the width of the weld bead after press forming.

At step S13 of FIG. 2, the bead-width designing unit 13 determines whether the weld bead width after press forming obtained through the analysis satisfies a predetermined condition. This determination may be based on a comparison between the weld bead width W2 after press forming obtained through the analysis and the target value T1. For example, if the weld bead width W2 after press forming is within a predetermined range relative to the target value T1, it can be determined to satisfy a condition.

If "YES" at step S13, the bead-width designing unit 13 decides to treat the width relating to the elements for the weld bead prior to the press forming as a design value (S15). In this case, for example, the unit decides to treat, as bead width design data, data indicating the relationship between the width W1 of the elements EB for the weld bead and position along the longitudinal direction D 1 in the analysis model data prior to press forming obtained at step S11.

If "NO" at step S13, the bead-width designing unit 13 decides on a design value of the width of the weld bead based on the weld bead width W2 after press forming obtained through the analysis and on the target value T1 (S14). Data that indicates the relationship between the design value of the width of the weld bead and position along the longitudinal direction D is generated to serve as bead width design data. For example, a design value may be the weld bead width W1 prior to press forming that has been modified depending on a value indicating the difference between the weld bead width W2 after press forming and the target value T1 (e.g., difference or ratio (proportion)). FIG. 5 shows an exemplary design value W3 calculated based on W1, W2 and T1.

The design value W3 for a given position along the longitudinal direction D may be calculated based on the difference between the width W2 and target value T1, (W2-T1), for example using the expression W3=(W1-(W2-T1). Alternatively, the design value W3 may be calculated based on the ratio of the width W2 to the target value T1, (W2/T1), for example using the expression W3=W1×(T1/W2).

Based on the bead width design data generated at step S14, the bead-width designing unit 13 sets a width relating to the elements EB for the weld bead in the analysis model data prior to forming. By way of example, the design value of the width of the weld bead decided upon at step S14 may be set as the value of the width relating to the elements EB of the weld bead in the analysis model data. The model acquisition unit 11 acquires analysis model data in which the width relating to the elements EB has been set based on the bead width design data (S11). Thereafter, the press-forming analysis is performed using the acquired analysis model data (S12).

Thus, the process from S11 to S14 is repeatedly performed until the weld bead width is determined to satisfy the predetermined condition ("YES" at step S13). Thus, if the width of the weld bead diverges from the target value due to strength properties and/or other causes, the variations in bead width can be caused to converge by means of a plurality of rounds of forming analysis. As a result, bead width design data is decided upon that contains a design value of the weld bead width that leads to the weld bead width after press forming being closer to the target value T1.

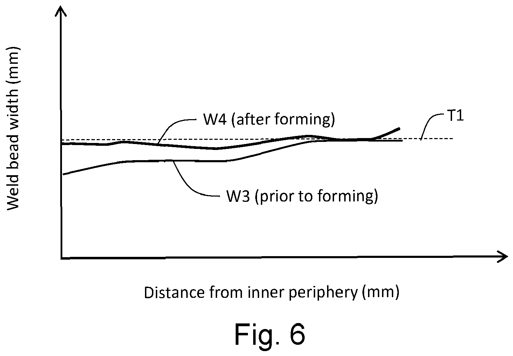

FIG. 6 is a graph showing exemplary results of a second round of press-forming analysis. The second round of press-forming analysis uses analysis model data in which the design value W3 in the bead width design data is set as the width relating to the elements EB of the weld bead. The width W4 of the elements EB for the weld bead after press forming shown in FIG. 6 is closer to the target value T1 than the width W2 in FIG. 5 which indicates the results of the first round of analysis.

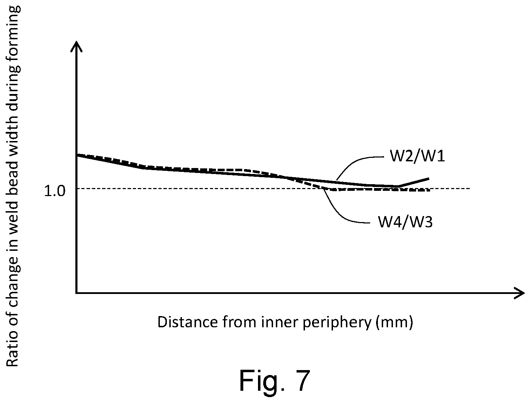

FIG. 7 is a graph showing the ratio of change in the width of the weld bead provided by the first round of press-forming analysis (W2/W1) and the ratio of change in the width of the weld bead provided by the second round of press-forming analysis (W4/W3). Thus, the width of the weld bead in a tailored blank may be updated based on a design value generated, thereby causing the width of the weld bead after press forming and the target value to converge.

### [Exemplary Operation 2 of Designing System]

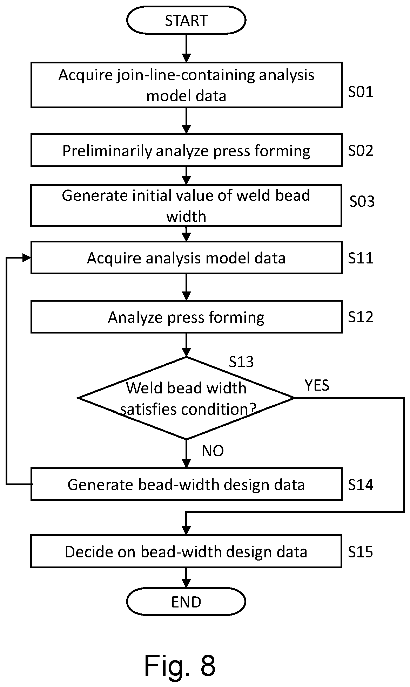

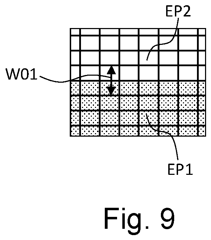

FIG. 8 is a flow chart illustrating another exemplary operation of the designing system 1. In the implementation shown in FIG. 8, the model acquisition unit 11 acquires join-line-containing analysis model data (S01). FIG. 9 illustrates a portion of a tailored-blank model represented by join-line-containing analysis model data. The join-line-containing tailored-blank model shown in FIG. 9 includes elements EP1 for the first sheet and elements EP2 for the second sheet, the sheets being in contact with each other. The borderline between the elements EP1 for the first sheet and the elements EP2 for the second sheet represents the join line for welding. That is, the join-line-containing analysis model data includes a join line defined as the borderline between the elements EP1 for the first sheet and the elements EP2 for the second sheet. In the present implementation, the width relating to adjacent rows of elements EP1 and EP2 for the first and second sheets which are in contact with each other (W01), that is, the width relating to elements on both sides of the join line (W01), corresponds to the width of the weld bead. The overall structure of the elements EP 1 for the first sheet and the elements EP2 for the second sheet shown in FIG. 9 may be, for example, the same as in FIG. 3. Further, the longitudinal direction of the join line in the implementation shown in FIG. 9 may be the same as the longitudinal direction D of the weld bead shown in FIG. 3.

In the join-line-containing analysis model data, a width W01 of elements on both sides of the join line is set. In the implementation shown in FIG. 9, the width W01 is uniform along the longitudinal direction of the join line; alternatively, the width W01 may vary along the longitudinal direction of the join line. In the implementation of FIG. 9, the width W01 of elements on both sides of the join line is the total width of elements on both sides of the join line. It is to be understood that the width relating to elements on both sides of the join line used in the preliminary press-forming analysis is not necessarily the same as the width of the weld bead. Further, the width relating to elements on both sides of the join line may be the total width of elements on both sides of the join line, with a plurality of rows of elements on each side of the join line. Alternatively, the width relating to elements on both sides of the join line may be a value calculated from the total width of elements on both sides of the join line.

At step S02 of FIG. 8, the press-forming analysis unit 12 uses the join-line-containing analysis model data acquired at step S01 to perform the preliminary press-forming analysis (i.e., simulation). The preliminary press-forming analysis calculates the deformation of the elements during press forming of a tailored blank indicated by the join-line-containing analysis model data. The preliminary forming analysis may include thermal-treatment analysis.

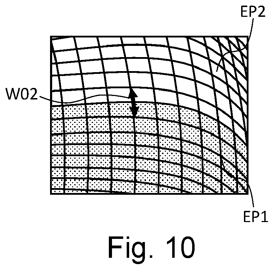

FIG. 10 illustrates a portion of an analysis result of the tailored-blank model shown in FIG. 9 as press-formed. In the implementation shown in FIG. 10, the width W02 relating to elements on both sides of the join line in the data of the tailored blank after press forming corresponds to the width of the weld bead. The width W02 relating to elements on both sides of the join line calculated through the press-forming analysis process provides information indicating press-forming-induced changes in the width of the weld bead.

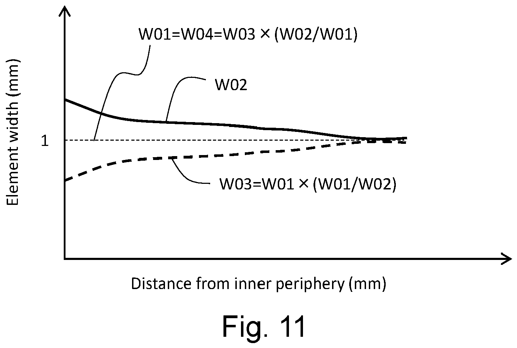

FIG. 11 is a graph showing values of the width relating to elements on both sides of the join line in each of the tailored-blank models shown in FIGS. 9 and 10. In the graph of FIG. 11, the horizontal axis represents the distance from the inner peripheral edge along the longitudinal direction of the weld bead, whereas the vertical axis represents the width relating to elements on both sides of the join line. In the implementation shown in FIG. 11, the width W01 relating to elements on both sides of the join line prior to press forming is uniform along the longitudinal direction of the join line. The width W02 relating to elements after press forming obtained through the analysis is not uniform along the longitudinal direction and is different from the width W01 prior to press forming. The relationship between the position along the longitudinal direction of the join line and the width relating to elements on both sides of the join line is changed by press forming. As shown in FIG. 11, the relationship between the position along the longitudinal direction of the join line and the width W02 indicates press-forming-induced changes in the width of the weld bead. Thus, changes in the width relating to elements sandwiching the join line (i.e., borderline), which are analyzed, enable determining the relationship between the position along the longitudinal direction of the join line and change in width (e.g., expansion or contraction).

At step S03 of FIG. 8, based on the width W02 after press forming obtained through the analysis at step S02, the bead-width designing unit 13 decides on an initial value of the width of the weld bead at each of positions along the longitudinal direction of the join line. Data that indicates the relationship between the initial value of the width of the weld bead and position along the longitudinal direction is generated to serve as initial value data. For example, a new initial value W03 may be the width W01 relating to elements that has been modified depending on the difference between the width W02 relating to elements after press forming and a predetermined target value W04. In the implementation shown in FIG. 11, by way of example, the target value W04 of the width relating to elements after forming is the same value as the initial value W01 prior to press forming for the analysis at step S02 (i.e., 1 mm in the figure). In this implementation, an initial value W03 is decided upon by multiplying the target value W04 by the reciprocal of the ratio of change (W02/W01) due to press forming in the analysis result (=W04×(W01/W02)=W01×(W01/W02).

Based on the initial value data generated at step S03, the bead-width designing unit 13 sets a width relating to the elements EB of the weld bead in the analysis model data prior to forming. For example, the width relating to the elements EB for the weld bead set which is uniform along the longitudinal direction D may be modified based on the initial value data. This enables determination of the weld bead width for the tailored blank being analyzed.

The model acquisition unit 11 acquires analysis model data in which the width relating to the elements EB has been set based on the bead width design data (S11). Subsequent steps S11 to S14 may be performed in the same manner as steps S11 to S14 shown in FIG. 2.

### (Exemplary Operation 2 of Manufacturing System)

When the manufacturing system 2 produces a tailored blank, the control unit 23 acquires bead width design data. The bead width design data is generated by the above-discussed designing system 1. For example, the control unit 23 reads, into the memory, bead width design data generated by the designing system 1 to make it accessible. In the manufacturing system 2, a first sheet P1 and a second sheet P2 are supported such that an edge of the first sheet P1 and an edge of the second sheet P2 are in butt welding position. The control unit 23 controls the heat input device 21 and moving device 22 to weld the first and second sheets P1 and P2 together. The controlled moving device 22 moves the heat input position for the heat input device 21, i.e., fusion location, along the butt line between the relevant edges of the first and second sheets P1 and P2 (i.e., longitudinal direction of the butt line). The control unit 23 controls the amount of heat input for fusing by the heat input device 21 based on the bead width design data to control the moving device 22 to move the fusion location forward. Thus, the position and the amount of heat input for welding along the butt line is controlled. During the control, the relationship between the position on the butt line and amount of heat input corresponds to the relationship between the position along the longitudinal direction of the weld bead and the width of the weld bead indicated by the bead width design data.

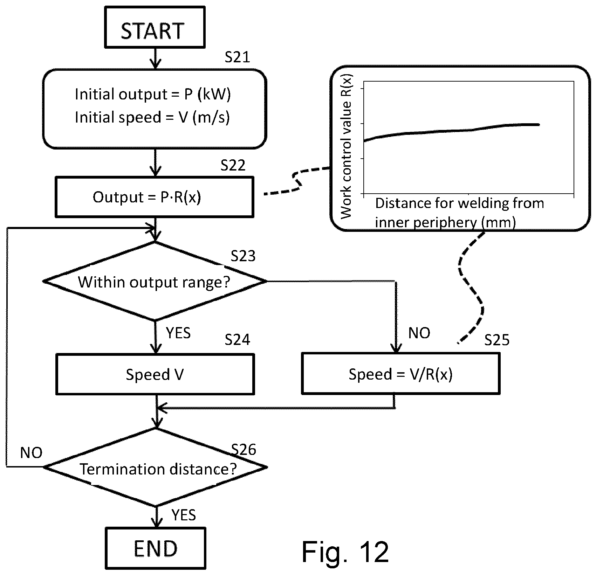

FIG. 12 is a flow chart showing an exemplary operation of the control unit 23. In the implementation shown in FIG. 12, laser welding is initiated (S21), with a laser output represented by initial output = P (kW) and at a welding speed represented by initial speed = V (m/s). The welding speed is the speed at which the spot of the laser (i.e., heat input point) moves in the welding direction. The welding direction is the longitudinal direction of the butt portion between the relevant edges of the first and second sheets P1 and P2. The longitudinal direction of the butt portion is the direction of the butt line. Welding is initiated at one end of the butt portion as determined along the longitudinal direction. That is, the initiation point of heat input (i.e., initial position of the heat input point) is one end of the butt line.

A laser output is decided upon that is P R(x) depending on the position x (mm) along the welding direction (S22). Here, x (mm) is the distance of movement from the initiation point of heat input, and a value of R (x) is decided upon using correspondence data indicating the relationship between distance x and control value R. The correspondence data may be data such as functions or tables, for example. The relationship between distance x and control value R indicated by this correspondence data corresponds to the relationship between the position along the longitudinal direction of the weld bead in the bead width design data and bead width. That is, R(x) is based on the bead width design data.

If the laser output P R(x) decided upon at step S22 is within a predetermined set range ("YES" at step S23), the welding speed is retained (S24). The set range may be a range of laser output that allows sufficiently stable welding. If "NO" at step S23, the welding speed is changed to V/R(x) (S25). R(x) is a value based on the bead width design data.

The control value for output R(x) used at step S22 and the control value for welding speed R(x) used at step S25 are not necessarily the same. For example, a control value for output R(x) at step S22 may be decided open based on the relationship between weld bead width and output value determined in advance by experiment, for example (e.g., functions) and the bead width design data. A control value for welding speed R(x) at step S25 may be decided open based on the relationship between weld bead width and welding speed determined in advance by experiment, for example, and on the bead width design data.

When the distance of movement x reaches the termination distance ("YES" at step S26), the control unit 23 stops laser output to terminate welding. Using the process shown in FIG. 12 to vary the laser output and welding speed based on the bead width design data enables controlling the width of the weld bead. The bead width design data is used as a weld control parameter. As a result, a tailored blank will be produced in which the width of the weld bead after press forming is closer to the target value.

The operation of the control unit 23 is not limited to the example shown in FIG. 12. For example, the control unit 23 may vary the amount of filler metal being supplied depending on the distance x. For example, the control unit 23 may decide on an amount of filler metal being supplied at a distance x based on the control value R(x) based on the bead width design data. In such implementations, a control value R(x) may be decided upon based on the relationship between weld bead width and the amount of filler metal being supplied determined in advance by experiment, for example, and on the bead width design data.

In the above-described embodiments, the designing system 1 begins with the shape of a press-formed product with a designed structure and performs a reverse analysis to a blank to provide data indicating not only changes in the position of the weld bead during press forming, but changes in its width. This provides design values for the weld bead in a blank that take account of the movement of the weld bead and the changes in its width due to press forming. Further, the above-described designing system 1 generates bead width design data indicating the relationship between the position along the longitudinal direction of the weld bead and its width. The bead width design data enables representing variations in the width of the weld bead along its longitudinal direction in a tailored blank prior to press forming as a function of the distance for which welding occurs (e.g., function of the position along the longitudinal direction of the weld line). Thus, parameters based on the bead width design data may be used by the manufacturing system 2 as parameters for controlling weld bead width (e.g., amount of heat input, welding speed, fusion width, or amount of filler metal being supplied). The above-discussed control parameters enable weld control where the amount of heat input, the welding speed or the amount of filler metal being supplied, for example, is variable depending on the distance for which welding occurs. Thus, a weld bead will be obtained after press forming that has the width of a target value (e.g., width constant along the longitudinal direction).

Although not limiting, the present invention may be applied, for example, to a tailored blank including a plurality of sheets joined together, the sheets being different in at least one of strength and thickness. The above-described embodiments produce a tailored blank prior to press forming having a weld bead width that varies along the longitudinal direction of the weld bead. Such a tailored blank is also an embodiment of the present invention. The press-formed product discussed below is encompassed in the embodiments of the present invention.

The press forming of a tailored blank to which the present invention is applied is not limited to any particular manner. For example, a tailored blank produced by the above-described embodiments may be press formed where the press forming is accompanied by at least one of extensional flange deformation, shrink flange deformation and stretch deformation. In such implementations, a uniform width of the weld bead can be achieved in a portion of the press-formed product that has experienced at least one of extensional flange deformation, shrink flange deformation and stretch deformation. Thus, a press-formed product with a uniform weld bead width in a portion of the press-formed product that has experienced extensional flange deformation, shrink flange deformation or stretch deformation is encompassed in the embodiments of the present invention. Further, the weld bead width in a portion of the press-formed product that has experienced extensional flange deformation, shrink flange deformation or stretch deformation can be made equivalent to the weld bead width in other portions that have experienced no such deformation or relatively small deformation. Such a press-formed product, in which a weld bead width in a portion that has experienced extensional flange deformation, shrink flange deformation or stretch deformation is equivalent to that in other portions, is encompassed in the embodiments of the present invention. Implementations where the weld bead widths are equivalent include implementations where the weld bead widths are exactly equal and, in addition, implementations where the weld bead widths have small differences of ±13 %, within a manufacture tolerance. In an example of such an implementation, a press-formed product may include at least one of a portion that has experienced extensional flange deformation, a portion that has experienced shrink flange deformation and a portion that has experienced stretch deformation, where the ratio of the minimum value of the width to the maximum value as measured across the entire weld bead along the longitudinal direction is represented by 77 % ≤ min/max ≤ 100 %. Extensional flange deformation, shrink flange deformation and stretch deformation during press forming will be described below with reference to typical examples.

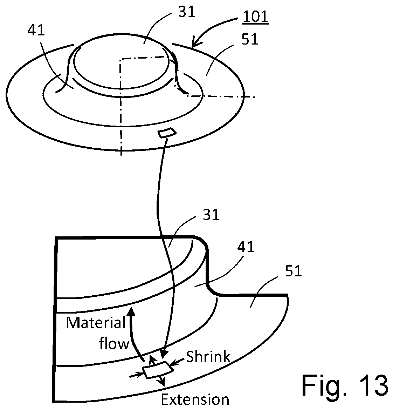

FIG. 13 illustrates a typical example of shrink flange deformation during press forming. The press-formed product 101 shown in FIG. 13 includes a cylindrically deep-drawn flange. The press-formed product 101 includes a circular top sheet 31, a cylindrical wall 41 extending from the periphery of the top sheet 31, and a flange 51. The flange 51 extends from that edge of the wall 41 opposite to that adjacent to the top sheet 31, outwardly in radial directions of the cylinder. The press-formed product 101 may be formed by deep drawing a tailored blank that has the shape of a flat sheet, for example. Drawing is typically performed by using a die part that grips peripheral portions of a sheet (e.g., blank holder and die block) to restrict deformation in the sheet-width direction of the peripheral portions of the sheet and, with that state kept, pushing a central portion of the sheet with a protruding die part (e.g., punch) into the recess of the recessed die part (e.g., die block) to form the sheet while causing the peripheral portions of the sheet to flow toward the center. During forming, the material flows in the directions of the arrows shown in the drawing. The flange 51 is the portion that experiences shrink flange deformation. In this example, the portion experiencing shrink flange deformation experiences deformation with contraction in directions perpendicular to the flow of the material (i.e., circumferential directions) and deformation with extension in directions in which the material flows (i.e., radial directions). In the portion experiencing shrink flange deformation, the ridge crossing the directions of the flow of the material is curved to protrude in the directions opposite to those of the flow of the material. In the example of FIG. 13, the top sheet 31 and wall 41 are portions that do not experience shrink flange deformation or experience relatively small deformation. In implementations where the wall 41 is generally perpendicular to the flange 51, as in FIG. 13, shrink flange deformation in the wall 41 is so small compared with that in the flange 51 that it is negligible. During forming, the top sheet 31 experiences substantially no deformation. For example, in implementations where the weld bead is located in a portion that experiences shrink flange deformation (i.e., flange 51), the weld bead width in the tailored blank prior to forming may be set to values that will result in a uniform width of the weld bead in the portion with shrink flange deformation after forming. Further, the press-formed product may be constructed such that the weld bead width in the portion that has experienced shrink flange deformation is equivalent to the weld bead width in other portions that have experienced no shrink flange deformation or relatively small deformation. For example, in a tailored blank prior to formation, the weld bead width in a portion that is to experience shrink flange deformation may be set to a larger value than the weld bead width in other portions that are to experience no shrink flange deformation or relatively small deformation. In such implementations, the portion that is to experience shrink flange deformation includes a portion with the maximum width, whereas the other portions include portions with a width of 80 to 91 % of the maximum width.

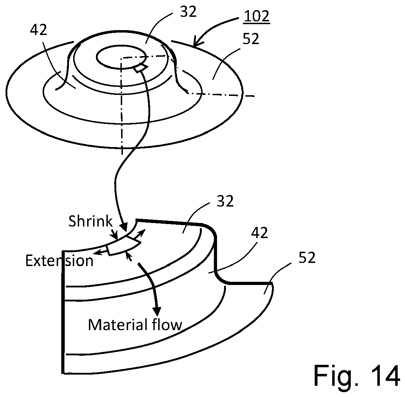

FIG. 14 shows a typical example of flange extension during press forming. The press-formed product 102 shown in FIG. 14 includes a cylindrically bulged surface. The press-formed product 102 includes a circular top sheet 32 including a through-hole at the center, a cylindrical wall 42 extending from the periphery of the top sheet 32, and a flange 52. The flange 52 extends from that edge of the wall 42 opposite to that adjacent to the top sheet 32, outwardly in radial directions of the cylinder. The press-formed product 102 may be formed, for example, by forming a flat-sheet tailored blank having a through-hole using the same die as for deep drawing. In implementations with a through-hole, the material flows, during forming, in the directions of the arrows shown in the drawing. The top sheet 32 is a portion that experiences extensional flange deformation. In this example, the portion that experiences extensional flange deformation experiences deformation with extension in directions perpendicular to the flow of the material (i.e., circumferential directions) and deformation with contraction in directions in which the material flows (i.e., radial directions). In the portion that experiences extensional flange deformation, the ridge crossing the directions of the flow of the material is curved to protrude in the directions of the flow of the material. In the example of FIG. 14, the wall 42 and flange 52 are portions that experience no extensional flange deformation or relatively small deformation. For example, in implementations where the weld bead is located in a portion that experiences extensional flange deformation (i.e., top sheet 32), the weld bead width in a tailored blank prior to forming may be set to values that will result in a uniform width of the weld bead in the portion that has experienced extensional flange deformation after forming. Further, the press-formed product may be constructed such that the weld bead width in the portion that has experienced extensional flange deformation is equivalent to the weld bead width in other portions that have experienced no extensional flange deformation or relatively small deformation. For example, in a tailored blank prior to forming, the weld bead width in a portion that is to experience extensional flange deformation may be set to a smaller value than the weld bead width in other portions that are to experience no extensional flange deformation or relatively small deformation. In such implementations, the other portions include a portion with the maximum width, whereas the portion that is to experience extensional flange deformation includes a portion with a width of 80 to 91 % of the maximum width.

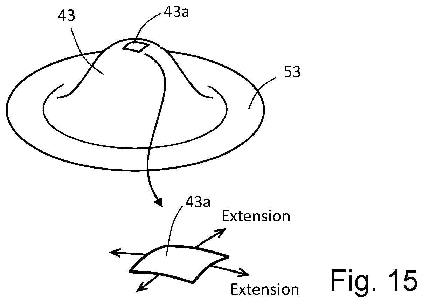

FIG. 15 shows a typical example of stretch deformation during press forming. The press-formed product 103 shown in FIG. 15 includes a ball-headed stretch surface. The press-formed product 103 includes a mountain-shaped projection 43 having a space inside, and a flange 53 extending from the foot of the projection 43. The press-formed product 103 is formed by press forming a tailored blank having the shape of a flat sheet. For example, forming accompanied by stretch deformation is possible by fixing peripheral portions of a sheet and pushing a central portion of a surface using a die part to create a protrusion. During forming, the material flows in directions that expand an apex portion 43a including the apex of the projection 43. The apex portion 43a is a portion that experiences stretch deformation. The flange 53 is a portion that experiences no stretch deformation or relatively small deformation. In this example, the portion that experiences stretch deformation experiences deformation with extension in the directions of two axes in which the material flows. For example, in implementations where the weld bead is located in a portion that experiences stretch deformation (i.e., apex portion 43a), the weld bead width in a tailored blank prior to forming may be set to values that will result in a uniform width of the weld bead in the portion that has experienced stretch deformation after forming. Further, the product may be constructed such that the weld bead width in a portion that has experienced stretch deformation is equivalent to the weld bead width in other portions that have experienced no stretch deformation or relatively small deformation. For example, in a tailored blank prior to forming, the weld bead width in a portion that is to experience stretch deformation may be set to a smaller value than the weld bead width in portions that are to experience no stretch deformation or relatively small deformation. In such implementations, the other portions include a portion with the maximum width, whereas the portion that is to experience stretch deformation includes a portion with a width of 80 to 91 % of the maximum width.

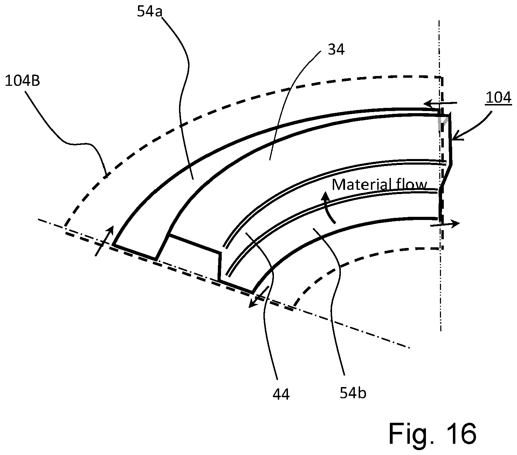

FIG. 16 shows an exemplary of a press-formed product produced by forming accompanied by extensional flange deformation and shrink flange deformation. The press-formed product 104 shown in FIG. 16 is a hat member that has a hat-shaped cross section and is curved along the longitudinal direction. The press-formed product 104 includes a top sheet 34, a pair of walls 44 extending from two opposite edges of the top sheet 34, and a long flange 54a and a short flange 54b that extend from those edges of the walls 44 opposite to those adjacent to the top sheet 34. The ridge between the top sheet 34 and each wall 44, the ridge between the long flange 54a and the associated wall 44 and the ridge between the short flange 54b and the associated wall 44 are curved to form arcs in the same direction. The short flange 54b is shorter than the long flange 54a. The ridge with the short flange 54b is located inward of the ridge with the long flange 54a. The press-formed product 104 is formed by press forming a tailored blank 104B having the shape of a flat sheet and that is fan-shaped as indicated by the broken lines in FIG. 16. In the implementation shown in FIG. 16, the long flange 54a is a portion that is to experience shrink flange deformation. The short flange 54b is a portion that is to experience extensional flange deformation. The ridge between the long flange 54a with shrink flange deformation and the associated wall 44 is curved to protrude in the directions opposite to those of the flow of the material during forming. The ridge between the short flange 54b with extensional flange deformation and the associated wall 44 is curved to protrude in the directions of the flow of the material. The top sheet 34 and walls 44 are portions that experience no shrink flange deformation nor extensional flange deformation or relatively small deformation of these types. In implementations where the walls 44 are close to perpendicular to the flanges 54a and 54b, as in the implementation of FIG. 16, the extensional flange deformation or shrink flange deformation of the walls 44 is so small compared with that of the flanges 54a and 54b that it is negligible. During forming, the top sheet 34 experiences substantially no deformation. For example, in implementations where the weld bead is located in at least one of a portion with shrink flange deformation (i.e., long flange 54) and a portion with extensional flange deformation (i.e., short flange 54b), the weld bead width in the tailored blank 104B prior to forming may be set to values that will result in a uniform width of the weld bead in a portion with shrink flange deformation or a portion with extensional flange deformation after forming. Further, the product may be constructed such that the weld bead width in a portion with shrink flange deformation or the weld bead width in a portion with extensional flange deformation is equivalent to the weld bead width in other portions with no shrink flange deformation nor extensional flange deformation or relatively small deformation. For example, in a tailored blank prior to forming, the weld bead width in a portion that is to experience extensional flange deformation may be set to a smaller value than the weld bead width in other portions that are to experience no extensional flange deformation nor shrink flange deformation or relatively small deformation. Further, in a tailored blank, the weld bead width in a portion that is to experience shrink flange deformation may be set to a larger value than the weld bead width in other portions that are to experience no extensional flange deformation nor shrink flange deformation or relatively small deformation. Furthermore, for example, the weld bead may include a portion that experiences extensional flange deformation, a portion that experiences shrink flange deformation, and other portions that experience no extensional flange deformation nor shrink flange deformation or relatively small deformation. In such implementations, by way of example, the portion with shrink flange deformation includes a portion with the maximum width in the entire weld bead. The other portions with no deformation or relatively small deformation include portions with a width of 80 to 91 % of the maximum width. Moreover, the portion with extensional flange deformation may include a portion with a width of 80 to 91 % of the maximum width in the other portions.

For example, a press-formed automobile part often includes intermixed deformed portions that have experienced, for example, extensional flange deformation, shrink flange deformation and stretch deformation illustrated by typical examples in FIGS. 13, 14 and 15. Thus, if the weld bead in a press-formed product from a tailored blank is located across portions with different kinds of deformation, the weld bead width may vary depending on location. To address this, the weld bead width in the tailored blank prior to forming may be set based on the bead width design data according to the above-described embodiments to control the weld bead width after forming taking account of different kinds of deformation of the tailored blank during forming. For example, it will be possible to achieve a uniform width of a weld bead that is located across portions with different kinds of deformation after forming.

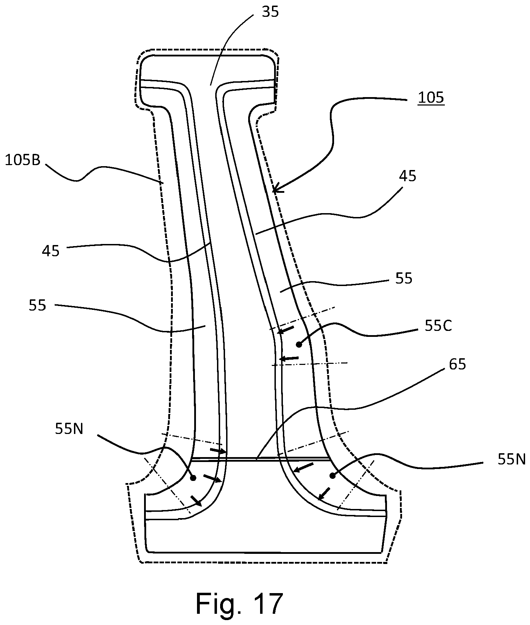

FIG. 17 illustrates an exemplary press-formed product produced by forming accompanied by extensional flange deformation and shrink flange deformation. The press-formed product 105 shown in FIG. 17 is a center pillar. The press-formed product 105 includes a top sheet 35, a pair of walls 45 and a pair of flanges 55. The walls 45 extend from two opposite edges of the top sheets 35. The flanges 55 extend from those edges of the walls 45 opposite to those adjacent to the top sheet 25. The walls 45 face each other. The flanges 55 extend from the associated edges of the walls 45 to extend away from each other. The ridge between the top sheet 35 and each wall 45 and the ridge between each wall 45 and the associated flange 55 extend in the longitudinal direction of the press-formed product 105. A cross section perpendicular to the longitudinal direction of the press-formed product 105 is hat-shaped. The press-formed product 105 is formed by press forming a tailored blank 105B having the shape of a flat sheet as indicated by the broken lines in FIG. 17. During forming, the material flows in the directions of the arrows. The flanges 55 include a portion 55C with shrink flange deformation (defined by one-dot-chain lines) and portions 55N with extensional flange deformation (defined by one-dot-chain lines). In the implementation shown in FIG. 17, a pair of opposite portions of the flanges 55 represent the portions 55N with extensional flange deformation. A portion of the flange 55 associated with a curved portion of the ridge between a flange 55 and the associated wall 45 is either a portion 55N with extensional flange deformation or a portion 55C with shrink flange deformation. The ridge for each portion 55N with extensional flange deformation is curved to protrude of the flow of the material. The ridge of the portion 55C with shrink flange deformation is curved to protrude in the direction opposite to that of the flow of the material. By way of example, the weld bead 65 is positioned to extend through the portions 55N with extensional flange deformation, the walls 45, and the top sheet 35. In such implementations, the weld bead width in the tailored blank 105B prior to forming may be set to values that will result in a uniform width of the weld bead in the portions 55N with extensional flange deformation after forming. Further, the press-formed product may be constructed such that the weld bead width in the portions 55N with extensional flange deformation is equivalent to the weld bead width in the other portions with no extensional flange deformation (i.e., walls 45 and top wall 35). Alternatively, in implementations where, for example, the weld bead extends through the portion 55C with shrink flange deformation, the weld bead width in the tailored blank 105B may be set to values that will result in a uniform width of the weld bead in the portion 55C with shrink flange deformation in the press-formed product. Furthermore, the press-formed product may be constructed such that the weld bead width in the portion 55C with shrink flange deformation is equivalent to the weld bead width in the other portions with no shrink flange deformation. For example, the press-formed product may be constructed such that the weld bead width in the portions 55N with extensional flange deformation, the weld bead width in the portion 55C with shrink flange deformation, and the weld bead width in the other portions with no extensional flange deformation nor shrink flange deformation are equivalent.

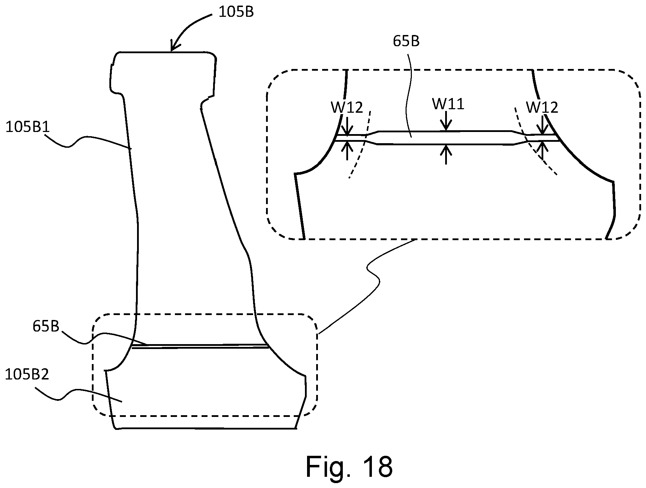

FIG. 18 illustrates the tailored blank 105B shown in FIG. 17. The tailored blank 105B includes a first sheet 105B1 and a second sheet 105B2, joined together by welding at the relevant edges. The weld bead 65B between the first and second sheets 105B1 and 105B2 extends from one edge of the tailored blank 105B to the other. The weld bead 65B includes a portion with a relatively large width and portions with relatively small widths. The portion with a relatively large width includes a portion with the maximum width in the entire weld bead 65B, i.e., portion with the maximum width W11. The width W12 of the portions of the weld bead with a relatively small width may be 80 to 91 % of the maximum width W11 of the weld bead 65B.

In the implementation of FIG. 18, both a portion of the weld bead 65B toward one end and another portion toward the other end provide portions with a width of 80 to 91 % of the maximum width. These portions are provided at locations that experience extensional flange deformation during press forming. Thus, in the tailored blank 10, the width of portions of the weld bead that experience extensional flange deformation, shrink flange deformation or stretch deformation (hereinafter also referred to as "extensional flange deformation etc.") during press forming may be different from the width of the other portions of the weld bead that experience no such deformation or relatively small deformation. Thus, the portions that experience extensional flange deformation etc. during press forming and the other portions may have an equivalent weld bead width after press forming. For example, assuming that the amount of distortion due to extensional flange deformation is 10 to 25 %, if W12/W11 is 80 to 91 % as discussed above, the difference between the weld bead width after press forming in a portion that has experienced extensional flange deformation etc. and the width in the other portions may be within ±13 % of the latter. In the implementation shown in FIG. 18, both a portion of the weld bead 65B toward one end and another portion toward the other end provide portions with a width of 80 to 91 % of the maximum width. Thus, in an arrangement with a weld bead 65B positioned across a pair of flanges 55, a pair of walls 45 and a top sheet 35, as shown in FIG. 17, it will be easier to achieve a substantially uniform weld bead width after press forming in portions that have experienced extensional flange deformation etc. during press forming and in the other portions. Further, in the implementation shown in FIG. 18, the width of the weld bead 65B is 80 % or more of the maximum width in the entire weld bead 65B along the longitudinal direction. Thus, in implementations where the weld bead in the tailored blank 10 extends through a region expected to experience extensional flange deformation during press forming and a region expected to experience no deformation or relatively small deformation, the width of the entire weld bead along the longitudinal direction may be 80 % or more to facilitate designing the width of the weld bead depending on the expected deformation.

Thus, if the weld bead width in a portion with extensional flange deformation etc. and that in the other portions are substantially uniform, a uniform weld bead width in the press-formed product will be achieved. This will enable distributing the various sub-sheets included in a tailored blank among regions of the press-formed product in accordance with a design. For example, it will be possible to reduce the difference between the CAR-estimated impact performance and the impact performance of the actual press-formed product. Further, if scale needs to be removed from the weld bead in a formed product, the work will be easier if the width of the weld bead in the formed product is uniform. For example, the range of shot blasting can be reduced. Further, the appearance of the weld bead in a press-formed product used as an outer part will be improved. Further, according to conventional techniques, positioning a bead in portions with extensional flange deformation, shrink flange deformation or stretch deformation affects the impact performance and other performances of the press-formed product, in view of which the positioning of the weld line is restricted during designing; according to the embodiments, the product is constructed such that a portion with extensional flange deformation, shrink flange deformation or stretch deformation after press forming has an bead width equivalent to that in the other portions. Thus, even if the bead is positioned in a portion with extensional flange deformation etc., changes in the weld bead width are prevented from affecting the performance of the press-formed product. As a result, a sufficient performance of the press-formed product will be provided while improving the freedom of design regarding positioning of a weld line, i.e., weld bead.

In the implementation shown in FIG. 17, the top sheet 35 and walls 45 are portions that experience no extensional flange deformation, shrink flange deformation or stretch deformation or relatively small deformation. In some cases, at least portions of the top sheet and walls may experience extensional flange deformation, shrink flange deformation or stretch deformation. For example, if the angle of the flange from a wall deviates significantly from a right angle, the wall may experience extensional flange deformation or shrink flange deformation. In other examples, in the case of a groove-shaped member including a top sheet and a pair of walls but no flanges, the walls may experience extensional flange deformation or shrink flange deformation.

In the above-described implementation shown in FIGS. 16 and 17, the press-formed product includes a top sheet, a pair of walls and a pair of flanges. That is, the press-formed product has a hat-shaped cross section. In a press-formed product with such a shape, the ridge between a flange and the associated wall has a curved portion curved as viewed in the direction perpendicular to the plane of the flange. A portion of the flange that extends from this curved portion in the direction opposite to that of the flow of the material is a portion with extensional flange deformation or shrink flange deformation. A flange portion extending from the ridge portion curved to protrude in the direction of the flow of the material as viewed in a direction perpendicular to the flange plane is a portion with extensional flange deformation. That is, a portion of the flange that extends outward from the portion of the ridge curved to protrude in the direction opposite to the direction of extension of the flange from the ridge portion located between the flange and wall (i.e., inwardly protruding curved portion) is a portion with extensional flange deformation. A flange portion extending from the ridge portion curved to protrude in the direction opposite to that of the flow of the material as viewed in the direction perpendicular to the flange plane is a portion with shrink flange deformation. That is, a portion of the flange extending outward from the portion of the ridge curved to protrude in the direction of extension of the flange from the ridge portion located between the flange and wall (i.e., outwardly protruding curved portion) is a portion with shrink flange deformation. In this construction, the weld bead is preferably formed such that the width of the weld bead as measured in the portion of the flange that extends outwardly from the curved portion of the ridge between the wall and flange is equivalent to the width of the weld bead in the other portions.

Press-formed products to which the present invention is applicable are not limited to the above-described examples. For example, in addition to center pillars, the present invention is also applicable to structural members for vehicles such as A-pillars, side sills, bumpers, roof rails, floor members, and front side members. For example, the present invention is applicable to structural members with ridges that are curved as viewed from above the top sheet, such as pillars, and, in addition, members that are curved toward a direction perpendicular to the plane of the top sheet (i.e., vertical direction), such as front side members or rear side members.

In the case of both cold press forming and hot press forming, deformation caused by press forming may cause changes in the weld bead width. The present invention may be applied to a cold-press-formed product or a hot-press-formed product to reduce the effects of such changes in the weld bead width on the performance of the press-formed product. In the case of hot press forming, changes in the weld bead width tend to be larger. The above-stated effect will be more significant if the present invention is applied to a hot-press-formed product.

Tailored blanks to which the present invention is applicable are not limited to ones including a plurality of sheets with different strengths or sheet thicknesses that are joined together. For example, the present invention may be applied to a tailored blank including a plurality of sheets with the same strength joined together or a tailored blank including a plurality of sheets with the same sheet thickness joined together. In such tailored blanks, too, weld bead width can change during press forming. Further, by way of example, the present invention may be suitably applied to a tailored blank that is hot press formed, i.e., tailored blank used as a material for a hot-press-formed product.

The present invention is not limited to the above-described embodiments. In the above-described embodiments, the elements for the weld bead in the analysis model data are located between the elements for the first sheet and the elements for the second sheet. For example, the row of elements for the first sheet and the row of elements for the second sheet that are in contact with each other, with their border constituted by the join line, may represent elements for the weld bead. Further, the above-described embodiments illustrate implementations where a plurality of rounds of press-forming analysis are performed; alternatively, bead width design data may be generated by a single round of press-forming analysis. Further, the bead width design data is not limited to data indicating weld bead widths at various positions along the longitudinal direction of the weld bead, as discussed above. The bead width design data may be, for example, data indicating a ratio of change for the weld bead along the longitudinal direction of the of the weld bead. The bead width design data is not limited to any particular format, and may be in the data form of discrete values or tables, or may be data with functions with positions as variables, for example. Further, a tailored blank may be formed by joining three or more sheets by welding. In such implementations, a tailored blank includes two or more weld beads. Such tailored blanks or press-formed products including two or more weld beads are encompassed in the embodiments of the present invention. At least one of the two or more weld beads in the tailored blank may include a portion with a width of 80 to 91 % of the maximum width of this particular weld bead. Further, in at least one of the two or more weld beads in the press-formed product, the width of a portion of the weld bead that has experienced extensional flange deformation etc. may be equivalent to the width of other portions of the weld bead that have experienced no deformation or relatively small deformation. Further, the analysis model data may be analysis model data representing a tailored blank including three or more sheets.

Although embodiments of the present invention have been described, the above-described embodiments are merely illustrative examples useful for carrying out the present invention. Thus, the present invention is not limited to the above-described embodiments, and the above-described embodiments, when carried out, may be modified as appropriate without departing from the spirit of the invention.

### REFERENCE SIGNS LIST

1: designing system
2: manufacturing system
11: model acquisition unit
12: press-forming analysis unit
13: bead-width designing unit
21: heat input device
22: moving device
23: control unit

## Claims

1. A method of designing a width of a weld bead in a tailored blank, comprising:
a model acquisition step for acquiring analysis model data representing a tailored blank having a first sheet and a second sheet joined together, the analysis model data containing elements for the first sheet, elements for the second sheet, and elements for a weld bead between an edge of the first sheet and an edge of the second sheet;
a press-forming analysis step for performing press-forming analysis using the analysis model data to calculate deformation of the elements for the first sheet, the second sheet and the weld bead when the tailored blank is press formed; and
a bead-width designing step for deciding on a design value of a width of the weld bead for each of positions along a longitudinal direction of the weld bead in the tailored blank prior to press forming based on a press-forming-induced change in a width relating to the elements for the weld bead obtained through calculation at the press-forming analysis step, to generate bead-width design data indicating a relationship between a position along the longitudinal direction of the weld bead and the design value of the width of the weld bead.

2. The method of designing a width of a weld bead in a tailored blank according to claim 1, wherein:
the model acquisition step, the press-forming analysis step and the bead-width designing step are repeatedly performed in two or more rounds; and
the model acquisition step from a second round onward acquires analysis model data containing the elements for the weld bead with a width based on the bead width design data generated at the bead-width designing step in a previous round.

3. The method of designing a width of a weld bead in a tailored blank according to claim 1 or 2, further comprising:
a join-line-containing-model acquisition step for acquiring join-line-containing analysis model data representing a tailored blank having a first sheet and a second sheet joined together, the join-line-containing model data containing elements for the first sheet and elements for the second sheet and including a join line for the first and second sheets, the elements for the first sheet and the elements for the second sheet being in contact along the join line;
a previous-press-forming analysis step for performing press-forming analysis using the join-line-containing analysis model data to calculate deformation of the elements for the first and second sheets when the tailored blank represented by the join-line-containing analysis model data is press formed; and
an initial value generation step for deciding on an initial value of the width of the weld bead corresponding to the join line based on a press-forming-induced change in a width relating to elements for the first and second sheets on both sides of the join line obtained through the calculation at the previous-press-forming analysis step to generate initial value data indicating a relationship between a position along the longitudinal direction of the weld bead and the initial value of the width of the weld bead,
wherein the model acquisition step acquires the analysis model data containing the elements for the weld bead with a width based on the initial value data generated at the initial value generation step.

4. A method of manufacturing a tailored blank comprising:
a data acquiring step of acquiring bead width design data indicating a relationship between a position along a longitudinal direction of a weld bead in a tailored blank and a width of the weld bead; and
a welding step for bringing an edge of a first sheet and an edge of a second sheet into butt welding position and moving a fusion location forward along a butt line to weld the edge of the first sheet and the edge of the second sheet,
wherein the welding step moves the fusion location forward while controlling an amount of heat input for fusing based on the bead width design data.

5. The method of manufacturing a tailored blank according to claim 4, wherein the welding step moves the fusion location forward while controlling an amount of filler metal being supplied based on the bead width design data.

6. A manufacturing system for manufacturing a tailored blank comprising:
a heat input device adapted to input heat into an edge of a first sheet and an edge of a second sheet positioned in butt welding position, to fuse the edges;
a moving device adapted to move a position for heat input by the heat input device along an butt line between the edge of the first sheet and the edge of the second sheet; and
a control unit adapted to control the heat input device and the moving device,
wherein the control unit acquires bead width design data indicating a relationship between a position along a longitudinal direction of a weld bead in a tailored blank and a width of the weld bead, and controls an amount of heat input for fusing by the heat input device and movement of the heat input position by the moving device based on the bead width design data.

7. A system for designing a weld bead width in a tailored blank, comprising:
a model acquisition unit adapted to acquire analysis model data representing a tailored blank having a first sheet and a second sheet joined together, the analysis model data containing elements for the first sheet, elements for the second sheet, and elements for a weld bead between an edge of the first sheet and an edge of the second sheet;
a press-forming analysis unit adapted to perform press-forming analysis using the analysis model data to calculate deformation of the elements for the first sheet, the second sheet and the weld bead when the tailored blank is press formed; and
a bead-width designing unit adapted to decide on a design value of a width of the weld bead for each of positions along a longitudinal direction of the weld bead in the tailored blank prior to press forming based on a press-forming-induced change in a width relating to the elements for the weld bead obtained through calculation by the press-forming analysis unit, to generate bead-width design data indicating a relationship between a position along the longitudinal direction of the weld bead and the design value of the width of the weld bead.

8. A structural member for a vehicle,
the structural member formed by a press-formed product made from a tailored blank including a first sheet and a second sheet joined together and a weld bead for welding an edge of the first sheet and an edge of the second sheet,
the press-formed product including at least one of a portion having experienced extensional flange deformation, a portion having experienced shrink flange deformation, and a portion having experienced stretch deformation during press forming,
a width of the weld bead in the portion having experienced extensional flange deformation, the portion having experienced shrink flange deformation, or the portion having experienced stretch deformation is equivalent to a width of the weld bead in another portion.

9. A tailored blank comprising:
a first sheet and a second sheet joined together and a weld bead for welding an edge of the first sheet and an edge of the second sheet,
the weld bead including a portion with a width of 80 to 91 % of a maximum width of the weld bead.

10. The tailored blank according to claim 9, wherein:
the weld bead extends from one edge of the tailored blank to another edge; and
at least one of one end portion of the weld bead including the one edge and another end portion including the other edge provides the portion with a width of 80 to 91 % of the maximum width.

11. The tailored blank according to claim 10, wherein, in the weld bead, both the one end portion and the other end portion provide the portions with a width of 80 to 91 % of the maximum width.
